# EUROPEAN PATENT APPLICATION

(11) **EP 4 718 941 A1**
(43) Date of publication of application: **01.04.2026**
(21) Application number: 24810849.0
(22) Date of filing: 30.04.2024
(51) Int. Cl.: H04W 84/06, H04W 36/08, H04W 36/32, H04W 36/36, H04W 48/16

(54) **COMMUNICATION DEVICE, COMMUNICATION METHOD, AND COMMUNICATION SYSTEM**

(30) Priority: 23.05.2023 JP 2023084879
(71) Applicant: Sony Group Corporation, Tokyo 108-0075 (JP)
(72) Inventor: MATSUDA, Hiroki, Tokyo 108-0075 (JP)
(74) Representative: Witte, Weller & Partner Patentanwälte mbB
(86) International application number: PCT/JP2024/016623
(87) International publication number: WO 2024/241841

(57) **Abstract**

A communication device is connected to a first non-geostationary satellite station among a plurality of non-geostationary satellite stations forming a cell positionally fixed on ground. The communication device includes an acquisition section configured to acquire, from the first non-geostationary satellite station in advance before switching processing, information related to switching of connection from the first non-geostationary satellite station to a second non-geostationary satellite station among the plurality of non-geostationary satellite stations, and a switching processing section configured to switch the connection from the first non-geostationary satellite station to the second non-geostationary satellite station without a random access procedure, based on the information related to switching of the connection.

## Description

### Technical Field

The present disclosure relates to a communication device, a communication method, and a communication system.

### Background Art

In recent years, with an increased demand for communication performance such as wide area coverage, a study of a Non-Terrestrial Network (NTN) has been initiated in which a radio network is provided from a device floating in the air or in space. In a non-terrestrial network, a non-geostationary non-ground station such as a medium earth orbit satellite, a low earth orbit satellite, and a High Altitude Platform Station (HAPS) may be used as base stations or relay stations.

### Citation List

### Patent Literature

PTL 1: International Publication No. 2021/230107

### Non Patent Literature

NPL 1: R2-1916351, Thales, "[108 #06] [NTN] Earth fixed vs. Earth moving cells in NTN LEO (Thales)," 3GPP TSG RAN2 Meeting #108, Reno, USA, 18-22 November 2019.

### Summary

### Technical Problem

Unlike a known base station or relay station fixed on the ground, the non-geostationary non-ground station appears to be moving at high speed in the sky when viewed from a terminal device on the ground. Accordingly, in a case where a known communication technology is directly applied to the non-terrestrial network, communication with high communication performance (for example, connection stability, low latency, high reliability, high throughput, power saving, low processing load, or the like) may not be realized.

Thus, the present disclosure proposes a communication device, a communication method, and a communication system capable of realizing high communication performance.

Note that the above-described problem or object is merely one of a plurality of problems or objects that can be solved or achieved by a plurality of embodiments disclosed in the present specification.

### Solution to Problem

In order to solve the above-described problem, a communication device according to an aspect of the present disclosure is a communication device configured to connect to a first non-geostationary satellite station among a plurality of non-geostationary satellite stations forming a cell positionally fixed on ground, wherein the communication device includes an acquisition section configured to acquire, from the first non-geostationary satellite station in advance before switching processing, information related to switching of connection from the first non-geostationary satellite station to a second non-geostationary satellite station among the plurality of non-geostationary satellite stations, and a switching processing section configured to switch the connection from the first non-geostationary satellite station to the second non-geostationary satellite station without a random access procedure based on the information related to switching of the connection.

### Brief Description of Drawings

[Fig. 1]

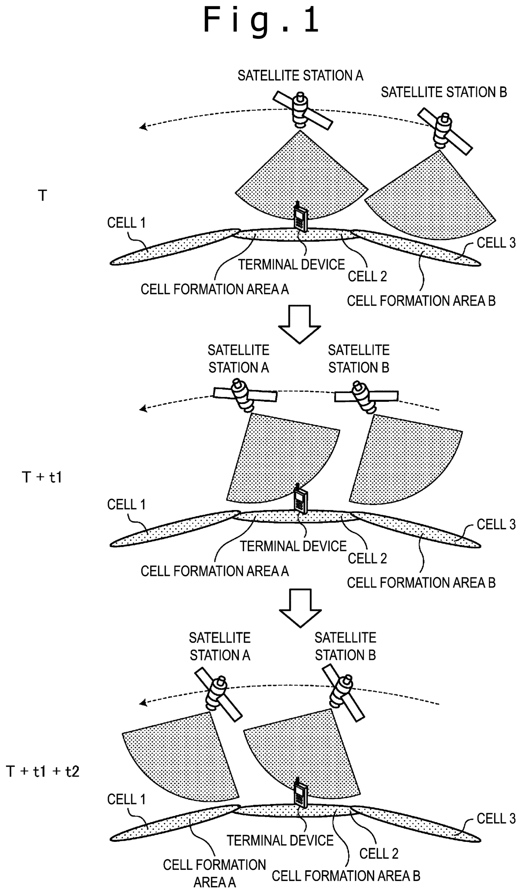

   Fig. 1 is a diagram for describing operation of a non-terrestrial network using earth fixed cells.
[Fig. 2]

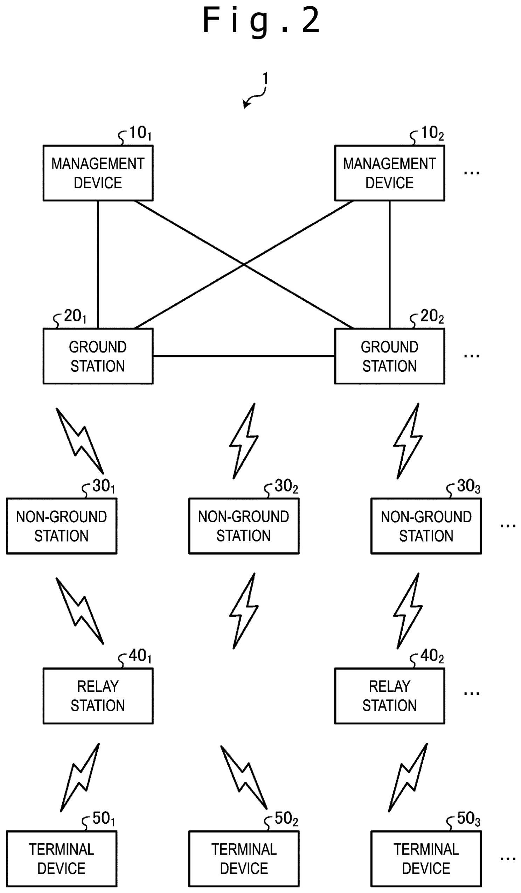

   Fig. 2 is a diagram illustrating a configuration example of a communication system according to an embodiment of the present disclosure.
[Fig. 3]

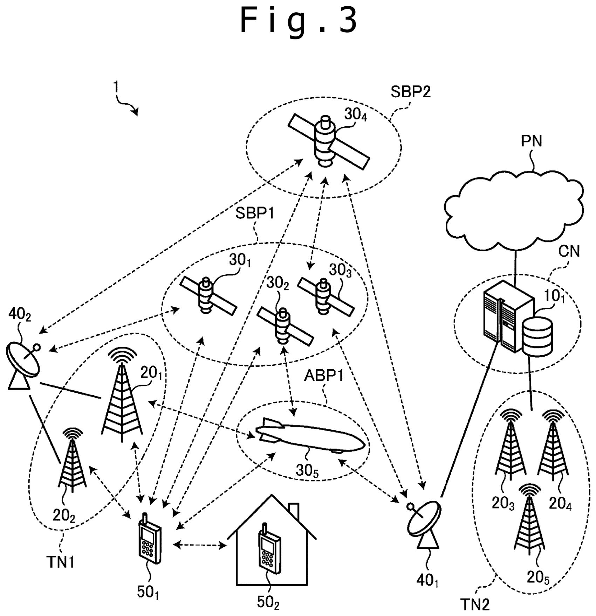

   Fig. 3 is a diagram illustrating an example of a radio network provided by the communication system.
[Fig. 4]

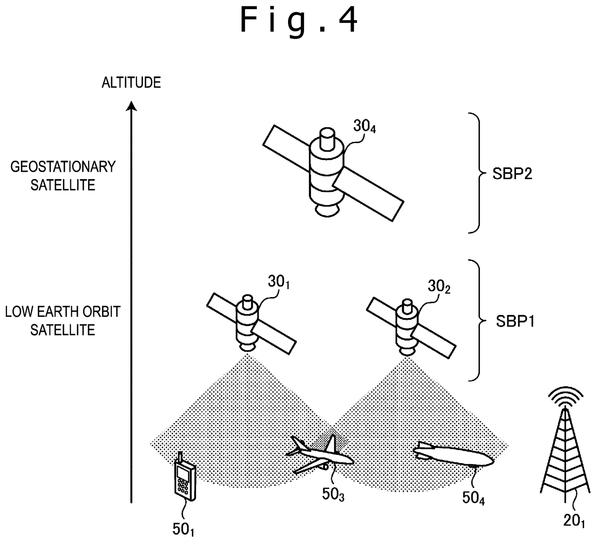

   Fig. 4 is a diagram illustrating an overview of a satellite communication provided by the communication system.
[Fig. 5]

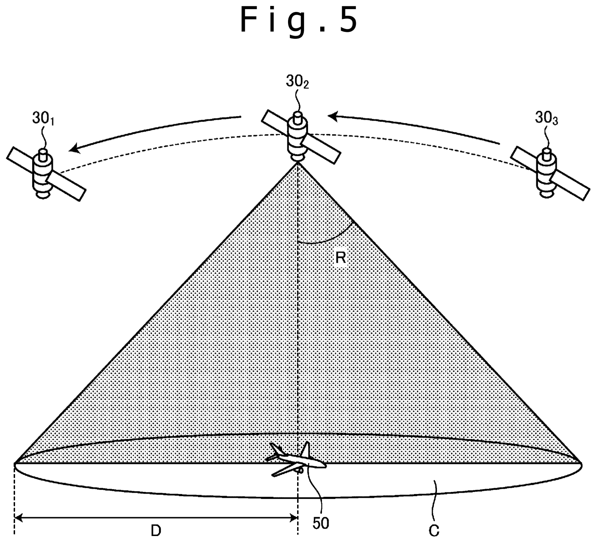

   Fig. 5 is a diagram illustrating an example of a cell formed by a non-geostationary satellite station.
[Fig. 6]

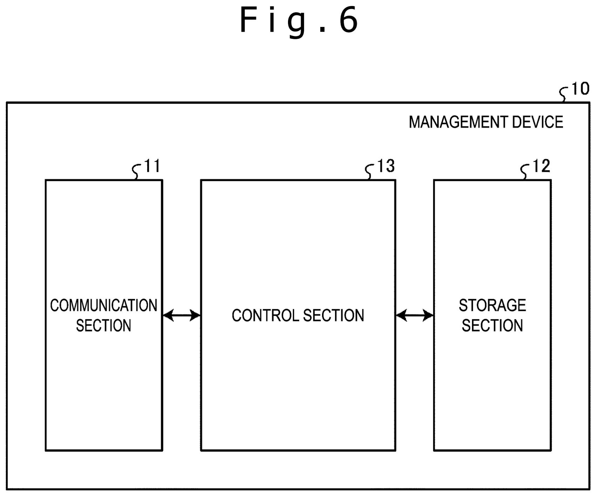

   Fig. 6 is a diagram illustrating a configuration example of a management device according to an embodiment of the present disclosure.
[Fig. 7]

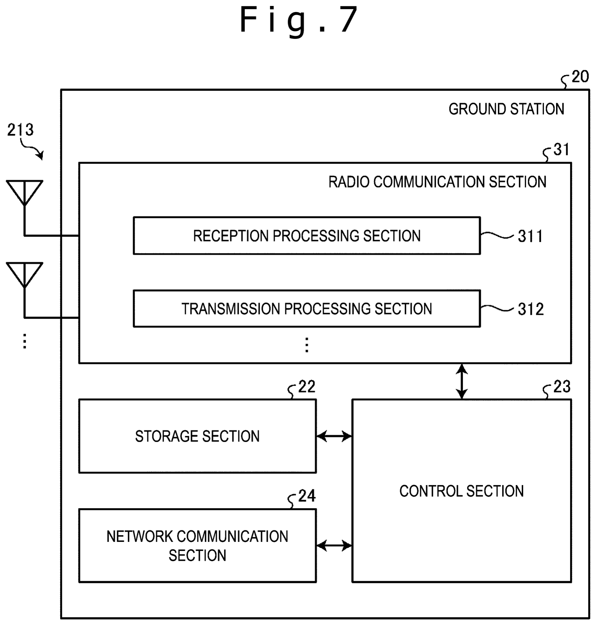

   Fig. 7 is a diagram illustrating a configuration example of a ground station according to an embodiment of the present disclosure.
[Fig. 8]

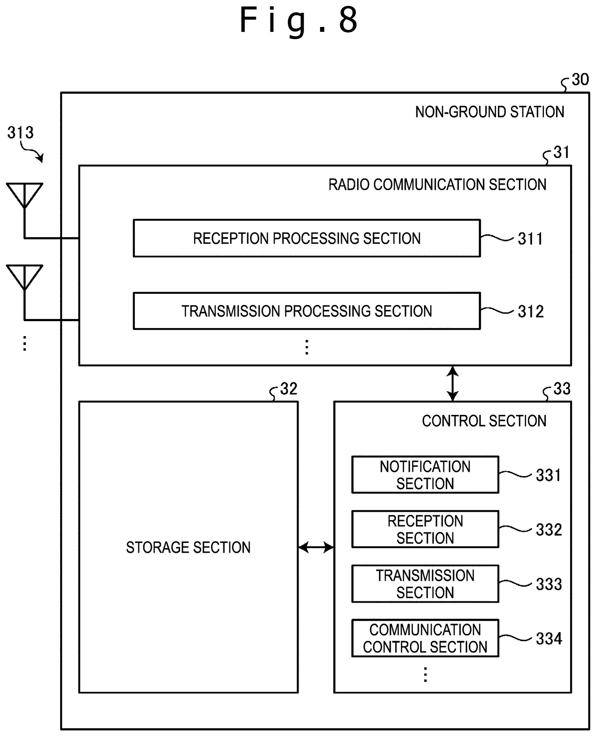

   Fig. 8 is a diagram illustrating a configuration example of a non-ground station according to an embodiment of the present disclosure.
[Fig. 9]

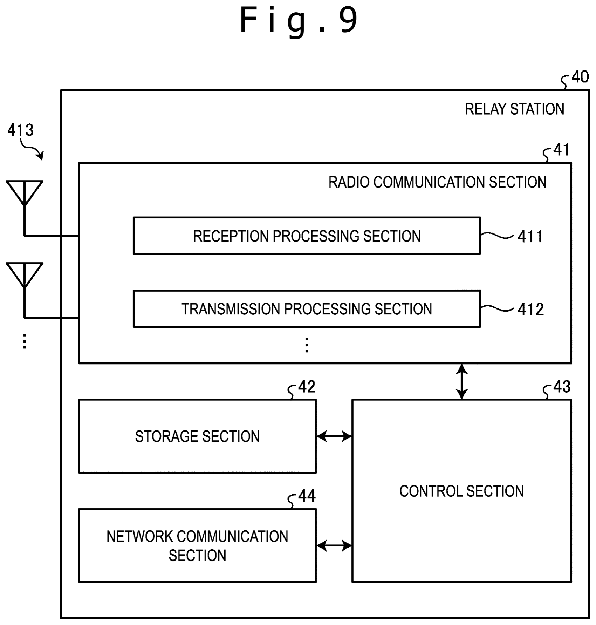

   Fig. 9 is a diagram illustrating a configuration example of a relay station according to an embodiment of the present disclosure.
[Fig. 10]

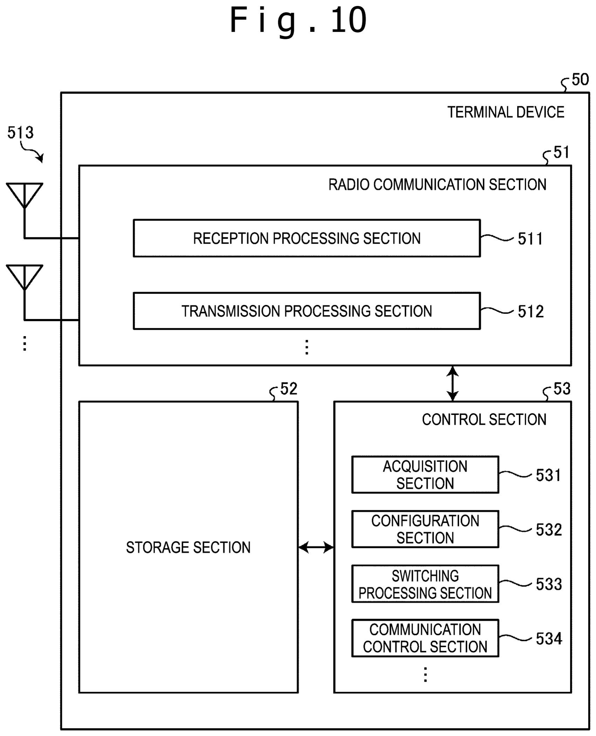

   Fig. 10 is a diagram illustrating a configuration example of a terminal device according to an embodiment of the present disclosure.
[Fig. 11]

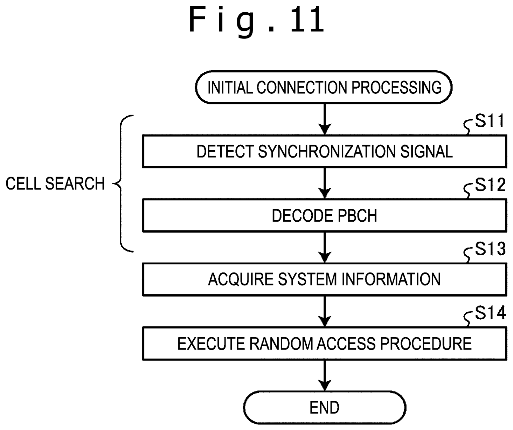

   Fig. 11 is a flowchart illustrating an example of initial connection processing.
[Fig. 12]

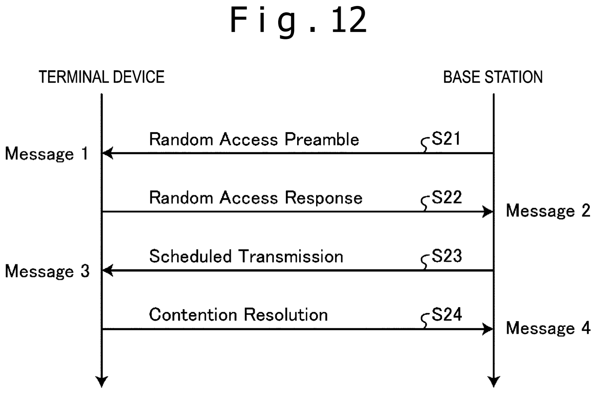

   Fig. 12 is a diagram illustrating a contention based random access procedure.
[Fig. 13]

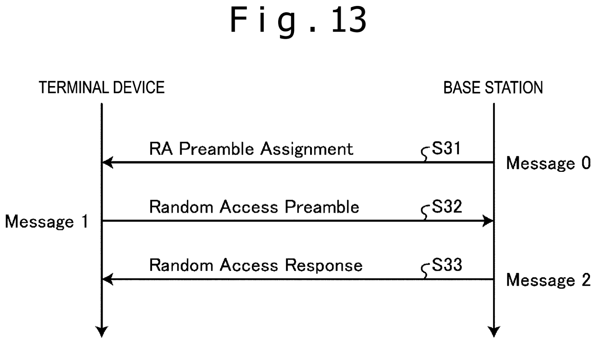

   Fig. 13 is a diagram illustrating a non-contention based random access procedure.
[Fig. 14]

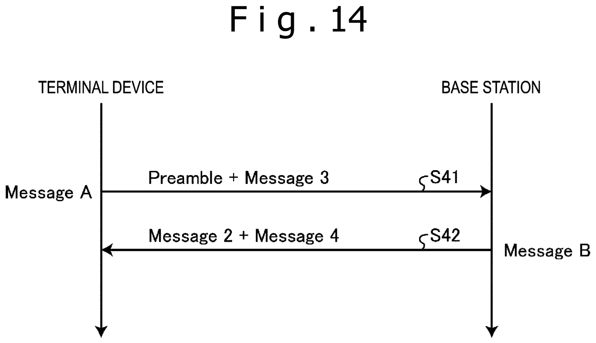

   Fig. 14 is a diagram illustrating a 2-step random access procedure.
[Fig. 15]

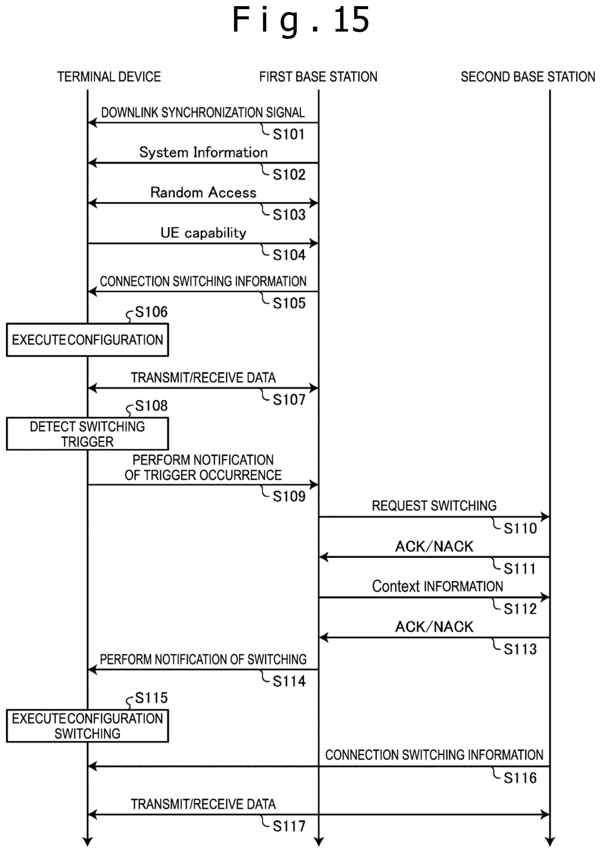

   Fig. 15 is a diagram illustrating an example of a sequence of switching of a cell formation area.
[Fig. 16]

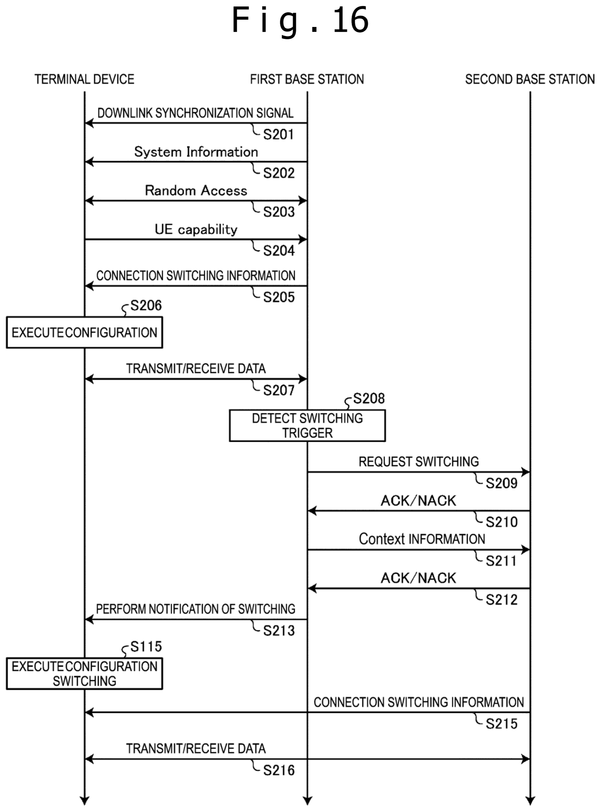

   Fig. 16 is a diagram illustrating another example of a sequence of switching of the cell formation area.

### Description of Embodiments

Hereinafter, embodiments of the present disclosure will be described in detail based on the drawings. In the following embodiments, the same components are denoted by the same reference numerals, and redundant description thereof will be omitted.

In the present specification and the drawings, a plurality of components having substantially the same functional configuration may be distinguished from one another by postfixing the same reference numeral with different numerals. For example, a plurality of configurations having substantially the same functional configuration are distinguished as terminal devices 50₁, 50₂, and 50₃ as necessary. However, in a case where a plurality of components having substantially the same functional configuration need not each be particularly distinguished from one another, only the same reference numeral is assigned to the components. For example, in a case where the terminal devices 50₁, 50₂, and 50₃ need not be particularly distinguished from one another, the terminal devices are simply referred to as the terminal device 50.

One or more embodiments (including examples and modifications) described below can each be implemented independently. On the other hand, at least a part of a plurality of embodiments described below may be implemented in combination with at least a part of another embodiment as appropriate. The embodiments may include novel features that are different from each other. Therefore, the plurality of embodiments can contribute to accomplishing or solving different objects or problems and can produce different effects.

The present disclosure will be described in the following item order.
1. Overview
2. Configuration of Communication System
   2-1. Configuration Example of Management Device
   2-2. Configuration Example of Ground Station
   2-3. Configuration Example of Non-Ground Station
   2-4. Configuration Example of Base Station
   2-5. Configuration Example of Relay Station
   2-6. Configuration Example of Terminal Device
3. Basic Operation of Communication System
   3-1. Initial Connection Processing
   3-2. Random Access Procedure
   3-3. Details of Random Access Procedure of NR
   3-4. 2-STEP RACH of NR
4. Operation of Communication System
   4-1. Overview of Processing
   4-2. Notification of Information Related to Switching of Cell Formation Area
   4-3. Switching of Cell Formation Area
   4-4. Skip of Processing of Random Access Procedure or the Like
   4-5. Continuous Transmission of Same Data
   4-6. Communication between Base Stations
5. Sequence Example
   5-1. Sequence Example 1
   5-2. Sequence Example 2
6. Variations
7. Conclusion

### 1. Overview

3GPP (trade name) is studying Radio access technologies (RATs) such as Long Term Evolution (LTE) and New Radio (NR). LTE and NR are a type of cellular communication technology, and enable mobile communication of a terminal device by allocating, in a cellular manner, a plurality of areas covered by base stations (for example, eNodeBs (eNBs), gNodeBs (gNBs), or RAN nodes (including EUTRANs and NGRANs)). In recent years, studies on 6G have been started. 6G is also a type of cellular communication technology. This technology may enable mobile communication of terminal devices by allocating, in a cellular manner, a plurality of areas covered by base stations. Note that a single base station may manage a plurality of cells.

Note that in the following description, "LTE" includes LTE-Advanced (LTE-A), LTE-Advanced Pro (LTE-A Pro), and Evolved Universal Terrestrial Radio Access (EUTRA). NR includes New Radio Access Technology (NRAT) and Further EUTRA (FEUTRA). Note that a single base station may manage a plurality of cells. In the following description, a cell corresponding to LTE is referred to as an LTE cell, and a cell corresponding to NR is referred to as an NR cell.

NR is a next-generation radio access scheme for LTE, and is a Radio Access Technology (RAT) different from LTE. NR is a radio access technology that can support various use cases including Enhanced Mobile Broadband (eMBB), Massive Machine Type Communications (mMTC), and Ultra-Reliable and Low Latency Communications (URLLC). NR can implement a technical framework corresponding to usage scenarios, requirements, deployment scenarios, and the like in these use cases.

6G is a cellular communication technology belonging to a generation next to NR and 5GS (5G System) corresponding to fifth generation mobile communications. 6G includes a radio access technology and a network technology between a base station and a core network and a data network. 6G sophisticates eMBB, mMTC, and URLLC, which have been considered as main use cases or requirements in NR. The technology provided in 6G may include a technology related to AI (for example, cognitive network, AI native Air Interface), a technology related to sensing (for example, Rader sensing, network as a sensor), and a technology related to terahertz communication.

### 1-1. Object

In cellular mobile communication, a radio network is configured by a base station or a relay station (hereinafter also referred to as a ground station) installed on the ground forming a cell (for example, a macro cell, a micro cell, a femto cell, or a small cell). The base station/relay station installed on the ground is referred to as a ground station (or a ground base station/ground relay station). A radio network provided by a ground station is referred to as a terrestrial network.

On the other hand, with an increased demand for reduction in cost of a base station, provision of coverage to an area that radio waves from the base station are difficult to reach, and the like, studies are being conducted about provision of a radio network to a terminal device via a base station/relay station other than the ground station, such as a satellite station or an aircraft station. The base stations/relay stations other than the ground stations are referred to as non-ground stations (or non-ground base stations/non-ground relay stations). A radio network provided from a non-ground station is referred to as a non-terrestrial network (NTN). By using the same radio access scheme for the terrestrial network and the non-terrestrial network, the terrestrial network and the non-terrestrial network can be operated in an integrated manner.

Among the non-ground stations, non-geostationary non-ground stations such as medium earth orbit satellite stations and low earth orbit satellite stations appear to be moving at high speed in the sky when viewed from a terminal device on the ground. In particular, a low earth orbit satellite station is moving in the air at about 7.6 km/s. Accordingly, a cell formed on the ground by the non-ground station also moves at high speed similarly to the non-ground station. In the following description, a cell that moves on the ground in accordance with movement of the non-ground station may be referred to as an Earth moving cell. A non-terrestrial network using the earth moving cell has the problem of, for example, frequent occurrence of handover associated with movement of the cell.

In order to solve this problem, a cell forming means for fixing the position of a cell formed on the ground is assumed to be adopted. For example, a non-ground station such as a satellite station fixes the position of a cell formed on the ground by steering a cell forming beam or the like. In the following description, the positionally fixed cell may be referred to as an Earth fixed cell. In a case where a non-terrestrial network using earth fixed cells is realized, the positions of cells on the ground are fixed, and thus the above-described problem (for example, frequent occurrence of handover) is assumed to be solved. In particular, very low earth orbit satellites that travel around Very Low Earth Orbits (VLEO) are expected to be utilized in non-terrestrial networks in the future. In a case where an earth moving cell is used in a non-terrestrial network using very low earth orbit satellites, a handover period is very short (for example, about 3.7 seconds in the case of a short period). Accordingly, earth fixed cells are assumed to be utilized for non-terrestrial networks in the future.

Fig. 1 is a diagram for describing operation of a non-terrestrial network using earth fixed cells. In the example of Fig. 1, positionally fixed cells (earth fixed cells) are formed on the ground. In the following description, the positions where the cells are formed are referred to as cell positions or simply as cells. Each of satellite stations A and B is one of a plurality of non-geostationary satellite stations forming the positionally fixed cells (cells 1 to 3 in the example of Fig. 1).

The satellite station A and the satellite station B each form a communication area (hereinafter, also referred to as a cell formation area) at a predetermined cell position on the ground. In the example of Fig. 1, the satellite station A forms a communication area (a cell formation area A illustrated in Fig. 1) at the position of the cell 2 at time T. The satellite station B forms a communication area (cell formation area B illustrated in Fig. 1) at the position of the cell 3 at time T. The terminal device is located at the position of the cell 2. Accordingly, the terminal device belongs to the communication area (cell formation area A) formed by the satellite station A at time T.

The satellite station A and the satellite station B control beams and the like to cause a communication area (cell formation area) formed on the ground to be in a state of being fixed at a predetermined cell position even when the positions of the satellite stations are changed due to movement. For example, at time T + t1, the satellite station A steers the beam to fix, at the position of the cell 2, the communication area (cell formation area A) formed by the satellite station A. At time T + t1, the satellite station B steers the beam to fix, at the position of the cell 3, the communication area (cell formation area B) formed by the satellite station B.

As time further advances, the satellite station A and the satellite station B have difficulty maintaining the communication areas (cell formation areas) at the current cell positions. At this time, the satellite station A and the satellite station B move the communication areas to the next cell positions. For example, at time T + t1 + t2, the satellite station A forms a communication area (cell formation area A) at the position of the cell 1. At time T + t1 + t2, the satellite station B forms a communication area (cell formation area B) at the position of the cell 2. At this time, the terminal device switches the connection from the communication area (cell formation area A) formed by the satellite station A to the communication area (cell formation area B) formed by the satellite station B. At this time, the satellite station A and the satellite station B share information related to cell formation between the satellite station A and the satellite station B, and move the cell formation area. Accordingly, the terminal device can switch the satellite station in such a manner that no cell handover has occurred (transparently).

However, in a case where the known communication technology is directly applied to a non-terrestrial network using earth fixed cells, there is a possibility that communication with high communication performance (for example, connection stability, low delay, high reliability, high throughput, power saving, low processing load, or the like) is not realized. For example, even in a case where information can be shared between satellite stations to behave as if no cell handover has occurred, in reality, the terminal device may be unable to smoothly switch the satellite station.

As a specific example, a non-terrestrial network using earth fixed cells is assumed to have, for example, problems as described in the following (1) to (3), besides handover.

(1) Switching is instantaneously made between a downlink beam direction and an uplink beam direction. Accordingly, the terminal device needs to switch the beam direction to an appropriate direction at the timing when the satellite station is switched.
(2) The satellite station to be connected is switched to instantaneously cause propagation delay difference. Accordingly, the communication device (the terminal device and/or the base station) needs to update information related to downlink-uplink frame synchronization, timing advance compensation, and the like.
(3) The above-described problems occur simultaneously in all terminal devices, and thus a large amount of signaling and the like occur simultaneously. Accordingly, signaling overhead needs to be reduced.

Note that the problems described above are merely examples. The problems with the non-terrestrial network using earth fixed cells are not limited to those described above.

### 1-2. Overview of Solving Means

In the present embodiment, the above-described problems are solved by the following means. Note that the description of the base station appearing in the following description can be replaced with that of the relay station as appropriate.

A communication system according to the present embodiment includes a base station and a terminal device. The base station is a non-ground station that is connected to the terminal device as a first non-geostationary satellite station among a plurality of non-geostationary satellite stations that form a cell positionally fixed on the ground. Alternatively, the base station is a ground station that connects to the terminal device using the first non-geostationary satellite station as a relay station.

The base station notifies the terminal device of information related to switching of connection from the first non-geostationary satellite station to a second non-geostationary satellite station (for example, a satellite station B illustrated in Fig. 1), in advance before the terminal device switches the connection from the first non-geostationary satellite station to the second non-geostationary satellite station. The first non-geostationary satellite station and the second non-geostationary satellite station are each one of a plurality of non-geostationary satellite stations. For example, the first non-geostationary satellite station is the satellite station A illustrated in Fig. 1, and the second non-geostationary satellite station is the satellite station B illustrated in Fig. 1.

The information related to switching of the connection may include information related to communication parameters after switching of the connection. For example, the information related to the communication parameters may include at least one of information related to timing advance, information related to terminal-specific transmission timing synchronization, information related to cell-common transmission timing synchronization, information related to transmission weights, information related to HARQ-disabling, information related to a position, an orbit, time, and an altitude of the satellite device, or information related to transmission power. In addition, the information related to switching of the connection may include the position information of the second non-geostationary satellite station (that is, information related to the beam direction after the connection switching).

The terminal device acquires information related to switching of the connection from the first non-geostationary satellite station in advance before the switching processing from the first non-geostationary satellite station to the second non-geostationary satellite station. The terminal device switches the connection from the first non-geostationary satellite station to the second non-geostationary satellite station without handover (that is, without a random access procedure) based on the information related to switching of the connection.

In this way, the terminal device acquires information related to switching of the connection from the non-geostationary satellite station in advance before switching of the connection. Accordingly, even in a case of performing communication using a non-terrestrial network using earth fixed cells, the terminal device can smoothly perform switching of the connection using information related to switching of the connection. As a result, the terminal device can realize communication with high communication performance.

Note that the base station that implements the technology described in the present embodiment is a non-ground base station device that operates as a communication device, such as a satellite station, a drone, a balloon, or an airplane. The base station that implements the present technology may be a gateway (Transparent payload scheme) deployed on the ground. The present technology is also applicable to communication between a ground base station device and a terminal device.

The overview of the present embodiment has been described above, and a communication system according to the present embodiment will be described in detail below.

### 2. Configuration of Communication System

First, a configuration of a communication system 1 of the present embodiment will be described.

The communication system 1 is a cellular communication system using a radio access technology such as LTE, NR, or 6G. The communication system 1 provides radio communication to a terminal device on the ground via a non-ground station (for example, a satellite station or an aircraft station). In a case where the non-ground station is a satellite station, the communication system 1 may be a mobile satellite communication system of a Bent-pipe (Transparent) type. Of course, some or all of the non-ground stations included in the communication system 1 may be configured to function as base stations instead of relay stations.

A radio access scheme used by the communication system 1 is typically NR, but is not limited thereto. The radio access scheme used by the communication system 1 may be a radio access scheme other than NR, such as 6G, LTE, Wideband Code Division Multiple Access (W-CDMA), or Code Division Multiple Access 2000 (cdma 2000). Of course, the radio access scheme used by the communication system 1 may be a radio access scheme of a generation subsequent to 6G.

Note that in the present embodiment, the ground station (also referred to as a ground base station) refers to a base station (including a relay station) installed on the ground. Here, the "ground" is not only land, but also ground in a broad sense including underground, on-the-water, and underwater. Note that in the following description, the term "ground station" may be replaced with a "gateway".

The technology of the present disclosure is applicable not only to communication between a non-ground base station and a terminal device but also to communication between a terrestrial base station and a terminal device. At this time, the ground base station and the terminal device may communicate with each other via a non-ground station such as a satellite station or an aircraft station.

Hereinafter, the configuration of the communication system 1 will be described in detail.

Fig. 2 is a diagram illustrating a configuration example of the communication system 1 according to the embodiment of the present disclosure. The communication system 1 includes a management device 10, a ground station 20, a non-ground station 30, a relay station 40, and a terminal device 50. The communication system 1 provides a user with a radio network capable of mobile communication by cooperative operation of radio communication devices constituting the communication system 1. The radio network of the present embodiment includes, for example, a radio access network and a core network. In the present embodiment, the radio communication device is a device having a radio communication function, and in the example of Fig. 2, corresponds to the ground station 20, the non-ground station 30, the relay station 40, and the terminal device 50.

The communication system 1 may include a plurality of management devices 10, a plurality of ground stations 20, a plurality of non-ground stations 30, a plurality of relay stations 40, and a plurality of terminal devices 50. In the example of Fig. 2, the communication system 1 includes management devices 10₁, 10₂, and the like as the management devices 10. The communication system 1 also includes ground stations 20₁, 20₂, and the like as the ground stations 20, and includes non-ground stations 30₁, 30₂, and the like as the non-ground stations 30. The communication system 1 also includes relay stations 40₁, 40₂, and the like as the relay stations 40, and includes terminal devices 50₁, 50₂, 50₃, and the like as the terminal devices 50.

Fig. 3 is a diagram illustrating an example of a radio network provided by the communication system 1.

The management device 10 is, for example, a device constituting a core network CN. The management device 10 is connected to a network PN. The management device 10 is connected to the ground station 20 and the non-ground station 30, and enables the terminal device 50 to connect to the network PN. The network PN is a public data network such as the Internet. The network PN is not limited to the Internet, and may be, for example, a Local Area Network (LAN), a Wide Area Network (WAN), a telephone network (a mobile phone network, a fixed telephone network, or the like), or a local Internet Protocol (IP) network. Of course, the network PN may be another mobile network. For example, the network PN may be a cellular network provided by an entity (for example, a business entity such as a Mobile Network Operator (MNO)) different from an entity that operates the communication system 1.

The ground station 20 and the non-ground station 30 are base stations or relay stations. In the following description, the ground station 20 and the non-ground station 30 are base stations, but the ground station 20 and the non-ground station 30 may be relay stations. The ground station 20 is, for example, a ground base station installed in a structure on the ground, and the non-ground station 30 is, for example, a non-ground base station such as a satellite station or a High Altitude Platform Station (HAPS). The ground station 20 and the non-ground station 30 each constitute a cell. A cell is an area where radio communication is covered. The cell may be any of a macro cell, a micro cell, a femto cell, and a small cell. Note that the communication system 1 may be configured in such a manner that a single base station (satellite station) manages a plurality of cells, or may be configured in such a manner that a plurality of base stations manage one cell.

In the example of Fig. 3, the ground stations 20₁ and 20₂ constitute a terrestrial network TN1, and the ground stations 20₃, 20₄, and 20₅ constitute a terrestrial network TN2. The terrestrial network TN1 and the terrestrial network TN2 are networks operated by a radio communication carrier such as a phone company. The terrestrial network TN1 and the terrestrial network TN2 may be operated by different radio communication service providers or may be operated by the same radio communication service provider. The terrestrial network TN1 and the terrestrial network TN2 can be regarded as one terrestrial network.

The terrestrial network TN1 and the terrestrial network TN2 are each connected to the core network. In the example of Fig. 3, the ground station 20 constituting the terrestrial network TN2 is connected to the core network CN including the management device 10₁ and the like, for example. In a case where the radio access scheme of the terrestrial network TN2 is LTE, the core network CN is an EPC. In a case where the radio access scheme of the terrestrial network TN2 is NR, the core network CN is a 5GC. Of course, the core network CN is not limited to the EPC or the 5GC, and may be a core network of another radio access scheme. Note that, in the example of Fig. 3, the terrestrial network TN1 is not connected to the core network, but the terrestrial network TN1 may be connected to the core network CN. The terrestrial network TN1 may be connected to a core network (not illustrated) different from the core network CN.

The core network CN includes, for example, a gateway device and a gateway switch, and is connected to the network PN via the gateway device or the gateway switch. As described above, the network PN is a public network such as the Internet. The gateway device may be a server device connected to the Internet, a local IP network, or the like. The gateway switch is, for example, a switch connected to a telephone network of a telephone company. The management device 10₁ may have functions as a gateway device or a gateway switch.

The non-ground station 30 illustrated in Fig. 3 is, for example, a satellite station or an aircraft station. A group of satellite stations (or satellite stations) constituting the non-terrestrial network is referred to as a Space-borne Platform. A group of aircraft stations (or aircraft stations) constituting the non-terrestrial network is referred to as an Airborne Platform. In the example of Fig. 3, the non-ground stations 30₁, 30₂, 30₃ constitute a space-borne platform SBP1, and the non-ground station 30₄ constitutes a space-borne platform SBP2. The non-ground station 30₅ constitutes an airborne platform ABP1.

The non-ground station 30 may be capable of communicating with a terrestrial network or a core network via the relay station 40. Of course, the non-ground station 30 may be capable of directly communicating with the terrestrial network or the core network without intervention of the relay station 40. Note that the non-ground station 30 may be capable of communicating with the terminal device 50 via the relay station 40, or may be capable of directly communicating with the terminal device 50. The non-ground stations 30 may be capable of directly communicating with each other without intervention of the relay station 40.

The relay station 40 relays communication between a device on the ground and the non-ground station 30. The relay station 40 may be a ground station or a non-ground station. In the example of Fig. 3, the relay station 40₂ relays communication between the ground station 20 and the non-ground station 30, and the relay station 40₁ relays communication between the management device 10 and the non-ground station 30. Note that the relay station 40 may relay communication between the terminal device 50 and the non-ground station 30. The relay station 40 may also be capable of communicating with another relay station 40.

The terminal device 50 can communicate with both the ground station and the non-ground station. In the example of Fig. 3, the terminal device 50₁ can communicate with the ground station constituting the terrestrial network TN1. The terminal device 50₁ can communicate with the non-ground stations constituting the space-borne platforms SBP1 and SBP2. The terminal device 50 can also communicate with the non-ground station constituting the airborne platform ABP1. Note that the terminal device 50 may be capable of communicating with the relay station 40. The terminal device 50 may be capable of directly communicating with another terminal device 50. The terminal device 50₁ may be able to directly communicate with the terminal device 50₂.

The devices constituting the space-borne platforms SBP1 and SBP2 perform satellite communications with the terminal device 50. Satellite communication is radio communication between a satellite station and a communication device. Fig. 4 is a diagram illustrating an overview of satellite communication provided by the communication system 1. The satellite stations are generally divided into geostationary satellite stations and low earth orbit satellite stations.

The geostationary satellite station is a satellite station that is located in a Geostationary Orbit and revolves around the earth at the same speed as the rotation speed of the earth. In the example of Fig. 4, the non-ground station 30₄ constituting the space-borne platform SBP2 is a geostationary satellite station. Among satellite orbits, a geostationary orbit is an orbit at an altitude of approximately 35786 km. The geostationary orbit is also referred to as a Geostationary Earth Orbit (GEO). The geostationary satellite station has substantially zero velocity relative to the terminal device 50 on the ground, and is observed to be stationary from the terminal device 50 on the ground. The non-ground station 30₄ performs satellite communication with the terminal devices 50₁, 50₃, 50₄, and the like located on the earth.

The low earth orbit satellite station is a satellite station that travels in a Low Orbit around the earth. In the example of Fig. 4, the non-ground stations 30₁ and 30₂ constituting the space-borne platform SBP1 are low earth orbit satellite stations. Among the satellite orbits, the low orbit is an orbit at an altitude of approximately 2000 km or lower (for example, an altitude of from 100 km to 2000 km). The low orbit is also referred to as a Low Earth Orbit (LEO). Unlike the geostationary satellite station, the low earth orbit satellite station has a velocity relative to the terminal device 50 on the ground, and is observed to be moving from the terminal device 50 on the ground. The non-ground stations 30₁ and 30₂ each constitute a cell and perform satellite communication with the terminal devices 50₁, 50₃, 50₄, and the like located on the earth.

Note that Fig. 4 illustrates only the two non-ground stations 30₁ and 30₂ as satellite stations constituting the space-borne platform SBP1. However, in practice, a satellite constellation is formed by many satellite stations. At this time, the number of satellite stations constituting the space-borne platform SBP1 is three or more (for example, several tens to several thousands).

Note that, although the example of Fig. 4 illustrates, as the satellite stations, only the geostationary satellite station and the low earth orbit satellite station, the satellite stations constituting the communication system 1 may include a medium earth orbit satellite station. The medium orbit satellite station is a satellite station that travels in a Medium Orbit around the earth. The medium orbit is an orbit located between the low orbit and the geostationary orbit. The medium orbit is also referred to as a Medium Earth Orbit (MEO). In addition, the satellite stations constituting the communication system 1 may include a highly elliptical orbiting satellite station located in a Highly Elliptical Orbiting (HEO). Note that the satellite stations forming the satellite constellation may include not only the low earth orbit satellite stations but also the medium earth orbit satellite stations, the high elliptical orbiting satellite stations, and the geostationary satellite stations. The satellite stations may include a very low earth orbit satellite station. The very low earth orbit satellite station is a satellite station that travels in a Very Low Earth Orbit (VLEO) around the earth.

Fig. 5 is a diagram illustrating an example of a cell formed by a non-geostationary satellite station. Fig. 5 illustrates a cell C formed by the non-ground station 30₂. In the example of Fig. 5, the non-ground station 30₂ is a low earth orbit satellite station (or a very low earth orbit satellite station). The satellite station traveling in the low orbit around the earth communicates with the terminal device 50 on the ground with a predetermined directivity to the ground. For example, in the example illustrated in Fig. 5, an angle R is 40°. In the example of Fig. 5, the radius D of the cell C formed by the non-ground station 30₂ is, for example, 1000 km. The low earth orbit satellite station moves at a constant velocity. In a case where a low earth orbit satellite station has had difficulty in providing satellite communication to the terminal device 50 on the ground, a subsequent low earth orbit satellite station (a neighbor satellite station) provides satellite communication. In the example of Fig. 5, in a case where the non-ground station 30₂ has had difficulty in providing satellite communication to the terminal device 50 on the ground, a subsequent non-ground station 30₃ provides satellite communication. Note that the values of the angle R and the radius D described above are merely examples while not limited thereto.

The medium and low earth orbit satellites are moving in orbits at very high speeds in the sky. For example, a low earth orbit satellite at the altitude 600 km is moving in orbit at a velocity of 7.6 km/S. A low earth orbit satellite forms a cell (or beam) with a radius of several 10 km to several 100 km on the ground, but the cell formed on the ground also moves in accordance with the movement of the satellite, and thus, even when the terminal device on the ground does not move, handover may be necessary. For example, assuming that the cell formed on the ground has a diameter of 50 km and the terminal device on the ground is not moving, handover occurs in about 6 to 7 seconds.

As described above, the terminal device 50 can perform radio communication using a non-terrestrial network. The non-ground station 30 of the communication system 1 constitutes a non-terrestrial network. Accordingly, the communication system 1 can extend service to the terminal device 50 located in an area the terrestrial network cannot cover.

For example, the communication system 1 can provide public safety communication and critical communication to communication devices such as Internet of Things (IoT) devices and Machine Type Communications (MTC) devices. Service reliability and recoverability are improved by using the non-terrestrial network, and thus the communication system 1 can reduce vulnerability of the service to a physical attack or a natural disaster. The communication system 1 can also realize service connection to passengers of airplanes and aircraft terminal devices such as drones, and service connection to mobile terminal devices such as ships and trains. In addition, the communication system 1 can provide A/V content, group communication, an IoT broadcast service, a software download service, a high-efficiency multicast service such as an emergency message, a high-efficiency broadcast service, and the like. Further, the communication system 1 can also realize traffic offloading between a terrestrial network and a non-terrestrial network.

To realize the above, the operation of the non-terrestrial network provided by the communication system 1 is desirably integrated with the operation of the terrestrial network in a higher layer. The non-terrestrial network provided by the communication system 1 desirably shares a common radio access scheme with the terrestrial network.

Note that the devices in the figures may be considered as devices in a logical sense. In other words, some of the devices in the figures may be realized by a Virtual Machine (VM), a Container (for example, Docker), or the like, and those devices may be implemented on physically the same hardware.

In the present embodiment, the ground station and the non-ground station can be rephrased as a base station. The satellite station can be rephrased as a relay station. In a case where the satellite station has functions as a base station, the satellite station can be rephrased as a base station.

Note that, in the following description, the terminal device may be referred to as User Equipment (UE). The terminal device is a type of communication device and is also referred to as a mobile station or a terminal.

In the present embodiment, the concept of the communication device includes not only a portable mobile device (terminal device) such as a mobile terminal but also a device installed in a structure or a mobile body. The structure or the mobile body itself may be regarded as the communication device. The concept of the communication device also includes not only a terminal device but also a base station and a relay station. The communication device is a type of a processing device and an information processing device. The communication device can be rephrased as a transmission device or a reception device.

Hereinafter, the configuration of each device constituting the communication system 1 will be specifically described. Note that the configuration of each device described below is merely an example. The configuration of each device may be different from the configuration described below.

### 2-1. Configuration Example of Management Device

Now, a configuration of the management device 10 will be described.

The management device 10 is a device that manages a radio network. For example, the management device 10 is a device constituting a core network. In a case where the core network is an EPC, the management device 10 is, for example, a device having functions as a Mobility Management Entity (MME). In a case where the core network is a 5GC, the management device 10 is a device having functions as an Access and Mobility Management Function (AMF) and/or a Session Management Function (SMF), for example. The MME, the AMF, and the SMF are Control Plane Network Function nodes in a core network. The management device 10 may be a device having functions as a control plane network function (6G CPNF) in 6G. The 6G CPNF may include one or more logical nodes.

Of course, the functions of the management device 10 are not limited to the MME, the AMF, the SMF, and the 6G CPNF. For example, in a case where the core network is a 5GC, the management device 10 may be a device having functions as a Network Slice Selection Function (NSSF), an Authentication Server Function (AUSF), a Policy Control Function (PCF), and Unified Data Management (UDM). The management device 10 may also be a device having functions as a Home Subscriber Server (HSS).

Note that the management device 10 may have functions of a gateway. For example, the management device 10 may have functions as a Serving Gateway (S-GW) or a Packet Data Network Gateway (P-GW). The management device 10 may also have functions of a User Plane Function (UPF). At this time, the management device 10 may include a plurality of UPFs. The management device 10 may also be a device having functions as a User Plane Network Fnuction (6G UPNF) in 6G.

The core network includes a plurality of Network Functions, and each network function may be integrated into one physical device or may be distributed to a plurality of physical devices. In other words, the management device 10 may be distributedly allocated in a plurality of devices. Further, this distributed allocation may be controlled to be executed dynamically. The base station (the ground station 20 and/or the non-ground station 30) and the management device 10 constitute one network and provide a radio communication service to the terminal device 50. The management device 10 is connected to the network PN such as the Internet. The terminal device 50 can use various services provided via the network PN.

Note that the management device 10 need not necessarily be a device constituting a core network. For example, the core network is assumed to be a core network of Wideband Code Division Multiple Access (W-CDMA) or Code Division Multiple Access 2000 (cdma 2000). At this time, the management device 10 may be a device that functions as a Radio Network Controller (RNC).

Fig. 6 is a diagram illustrating a configuration example of the management device 10 according to an embodiment of the present disclosure. The management device 10 includes a communication section 11, a storage section 12, and a control section 13. Note that the configuration illustrated in Fig. 6 is a functional configuration, and may be different from a hardware configuration. The functions of the management device 10 may be distributedly implemented in a plurality of physically separate configurations. For example, the management device 10 may include a plurality of server devices.

The communication section 11 is a communication interface for communicating with other devices. The communication section 11 may be a network interface or an equipment connection interface. For example, the communication section 11 may be a Local Area Network (LAN) interface such as a Network Interface Card (NIC), or may be a Universal Serial Bus (USB) interface including a USB host controller, a USB port, and the like. The communication section 11 may also be a wired interface or a wireless interface. The communication section 11 functions as a communication means of the management device 10. The communication section 11 communicates with the ground station 20 and the like according to the control of the control section 13.

The storage section 12 is a storage device capable of data reading and data writing, such as a Dynamic Random Access Memory (DRAM), a Static Random Access Memory (SRAM), a flash memory, or a hard disk. The storage section 12 functions as a storage means of the management device 10. The storage section 12 stores, for example, the connection state of the terminal device 50. For example, the storage section 12 stores a state of Radio Resource Control (RRC) and a state of EPS Connection Management (ECM) of the terminal device 50. The storage section 12 may function as a home memory that stores position information of the terminal device 50.

The control section 13 is a controller that controls each section of the management device 10. The control section 13 is implemented by a processor such as a Central Processing Unit (CPU), a Micro Processing Unit (MPU), or a Graphics Processing Unit (GPU). For example, the control section 13 is implemented by a processor executing various programs stored in a storage device inside the management device 10 using a Random Access Memory (RAM) or the like as a work area. Note that the control section 13 may be implemented by an integrated circuit such as an Application Specific Integrated Circuit (ASIC) or a Field Programmable Gate Array (FPGA). The control section 13 may also be implemented by a GPU. Any of the CPU, the MPU, the ASIC, the FPGA, and the GPU can be regarded as a controller. Note that the control section 13 may include a plurality of physically separate objects. For example, the control section 13 may include a plurality of semiconductor chips.

Note that operation of the control section 13 may be similar to operation of a control section 23 of the ground station 20, or may be similar to operation of a control section 33 of the non-ground station 30. In addition, the operation of the control section 13 may be similar to operation of a control section 43 of the relay station 40 or may be similar to operation of a control section 53 of the terminal device 50.

### 2-2. Configuration Example of Ground Station

First, the configuration of the ground station 20 will be described.

The ground station 20 is a communication device located on the ground. For example, the ground station 20 is a radio communication device that performs radio communication with the terminal device 50. The ground station 20 may be configured to perform radio communication with the terminal device 50 via the non-ground station 30, or may be configured to perform radio communication with the terminal device 50 via a relay station on the ground. Of course, the ground station 20 may be configured to directly perform radio communication with the terminal device 50.

Fig. 7 is a diagram illustrating a configuration example of the ground station 20 according to an embodiment of the present disclosure. The ground station 20 includes a radio communication section 21, a storage section 22, a control section 23, and a network communication section 24. The configuration illustrated in Fig. 7 is a functional configuration, and may be different from a hardware configuration. The functions of the ground station 20 may be distributedly implemented in a plurality of physically separate configurations.

The radio communication section 21 is a signal processing section for performing radio communication with other radio communication devices (for example, the non-ground station 30, the relay station 40, the terminal device 50, and another ground station 20). The radio communication section 21 operates according to the control of the control section 23. The radio communication section 21 supports one or more radio access schemes. For example, the radio communication section 21 supports at least one of NR, LTE, or 6G. The radio communication section 21 may support W-CDMA and/or cdma 2000 in addition to NR, LTE, and 6G. The radio communication section 21 may also support an automatic retransmission technology such as Hybrid Automatic Repeat reQuest (HARQ).

The radio communication section 21 includes a reception processing section 211, a transmission processing section 212, and an antenna 213. The radio communication section 21 may include a plurality of reception processing sections 211, a plurality of transmission processing sections 212, and a plurality of antennas 213. Note that, in a case where the radio communication section 21 supports a plurality of radio access schemes, each section of the radio communication section 21 may be individually configured for each radio access scheme. For example, the reception processing section 211 and the transmission processing section 212 may be individually configured for each of LTE, NR, and 6G. The antenna 213 may include a plurality of antenna elements (for example, a plurality of patch antennas). At this time, the radio communication section 21 may be configured to be capable of beamforming. The radio communication section 21 may be configured to be capable of polarization beamforming using a vertically polarized wave (V polarized wave) and a horizontally polarized wave (H polarized wave).

The reception processing section 211 performs processing of an uplink signal received via the antenna 213. For example, the reception processing section 211 performs, on the uplink signal, downconversion, removal of an unnecessary frequency component, control of an amplification level, quadrature demodulation, conversion into a digital signal, removal of a guard interval (cyclic prefix), extraction of a frequency domain signal by fast Fourier transform, and the like. Then, the reception processing section 211 separates, from the signal on which the above-described processing has been performed, an uplink channel such as a Physical Uplink Shared Channel (PUSCH) or a Physical Uplink Control Channel (PUCCH) and an uplink reference signal. The reception processing section 211 demodulates the reception signal by using a modulation scheme such as Binary Phase Shift Keying (BPSK) or Quadrature Phase Shift Keying (QPSK) for a modulation symbol of the uplink channel. The modulating method used for demodulation may be 16 Quadrature Amplitude Modulation (QAM), 64QAM, 256QAM, or 1024QAM. At this time, signal points on the constellation do not necessarily have to be equidistant. The constellation may be a Non Uniform Constellation (NUC). Then, the reception processing section 211 performs decoding processing on the demodulated coded bits of the uplink channel. The decoded uplink data and uplink control information are output to the control section 23.

The transmission processing section 212 performs transmission processing of downlink control information and downlink data. For example, the transmission processing section 212 encodes the downlink control information and the downlink data received from the control section 23 by using an encoding scheme such as block encoding, convolutional encoding, or turbo encoding. Here, the encoding may be based on, for example, a polar code or a Low Density Parity Check Code (LDPC code). Then, the transmission processing section 212 modulates the encoded bits by a predetermined modulation scheme such as BPSK, QPSK, 16QAM, 64QAM, 256QAM, or 1024QAM. At this time, signal points on the constellation do not necessarily have to be equidistant. The constellation may be a non uniform constellation (NUC). Then, the transmission processing section 212 multiplexes the modulation symbol of each channel and the downlink reference signal, and allocates the multiplexed modulation symbol and downlink reference signal in a predetermined resource element. Then, the transmission processing section 212 performs various types of signal processing on the multiplexed signal. For example, the transmission processing section 212 performs processing such as conversion into a time domain by fast Fourier transform, addition of a guard interval (cyclic prefix), generation of a baseband digital signal, conversion into an analog signal, quadrature modulation, up-conversion, removal of an extra frequency component, and amplification of power. The signal generated by the transmission processing section 212 is transmitted from the antenna 213.

The antenna 213 is an antenna device (antenna section) that converts a current into a radio wave and converts a radio wave into a current. The antenna 213 may include one antenna element (for example, one patch antenna) or a plurality of antenna elements (for example, a plurality of patch antennas). In a case where the antenna 213 includes a plurality of antenna elements, the radio communication section 21 may be configured to be capable of beamforming. For example, the radio communication section 21 may be configured to generate a directional beam by controlling the directivity of a radio signal using a plurality of antenna elements. The antenna 213 may be a dual polarized antenna. In a case where the antenna 213 is a dual polarized antenna, the radio communication section 21 may use a dual polarized wave including a vertically polarized wave (V polarized wave) and a horizontally polarized wave (H polarized wave) in transmitting a radio signal. In transmitting the radio signal, the radio communication section 21 may use dual polarized waves including polarized waves at 45 degrees and -45 degrees from the vertical direction. The radio communication section 21 may control the directivity of the radio signal transmitted using the dual polarized waves. The radio communication section 21 may transmit and receive a spatially multiplexed signal via a plurality of layers including a plurality of antenna elements.

The storage section 22 is a storage device capable of data reading and data writing, such as a DRAM, an SRAM, a flash memory, or a hard disk. The storage section 22 functions as a storage means of the ground station 20.

The control section 23 is a controller that controls each section of the ground station 20. The control section 23 is implemented by, for example, a processor such as a CPU, an MPU, or a GPU. For example, the control section 23 is implemented by the processor executing various programs stored in the storage device inside the ground station 20 using the RAM or the like as a work area. The control section 23 may be implemented by an integrated circuit such as an ASIC or an FPGA. The control section 23 may be implemented by a GPU. Any of the CPU, the MPU, the ASIC, the FPGA, and the GPU can be regarded as a controller. The control section 23 may include a plurality of physically separate objects. For example, the control section 23 may include a plurality of semiconductor chips.

Note that the operation of the control section 23 of the ground station 20 may be similar to the operation of the control section 33 of the non-ground station 30. At this time, the control section 23 of the ground station 20 may have a configuration similar to that of a functional block (described below) included in the control section 33 of the non-ground station 30. Of course, the operation of the control section 33 of the non-ground station 30 may be the same as the operation of the control section 23 of the ground station 20. In addition, the operation of the control section 23 may be similar to the operation of the control section 43 of the relay station 40, may be similar to the operation of the control section 13 of the management device 10, or may be similar to the operation of the control section 53 of the terminal device 50.

The network communication section 24 is a communication interface for communicating with other devices. The network communication section 24 is, for example, a network interface. For example, the network communication section 24 is a LAN interface such as an NIC. The network communication section 24 may be a wired interface or a radio interface. The network communication section 24 functions as a communication means of the ground station 20. The network communication section 24 communicates with the management device 10, the relay station 40, and the like according to the control of the control section 23.

### 2-3. Configuration Example of Non-Ground Station

Now, the configuration of the non-ground station 30 will be described.

In the present embodiment, the non-ground station 30 is a base station that provides functions of a base station to the terminal device 50. Alternatively, the non-ground station 30 is a relay station that relays communication between the ground station 20 (or another non-ground station 30) and the terminal device 50. The non-ground station 30 may be a satellite station or an aircraft station.

The satellite station is a satellite station capable of floating in outer space. The satellite station may be a device mounted on a space mobile body such as an artificial satellite, or may be the space mobile body itself. The space mobile body is a mobile body that moves in the outer space. Examples of the space mobile body include artificial celestial bodies such as artificial satellites, space ships, space stations, and probes.

Note that the satellite acting as a satellite station may be any of a very low earth orbit satellite, a low earth orbit satellite, a medium earth orbit satellite, and a geostationary satellite. The satellite acting as a satellite station may also be a highly elliptical orbit satellite that travels around in the Highly Elliptical Orbiting (HEO). The satellite station may be a communication device mounted on these satellites.

The aircraft station is a radio communication device that can float in the atmosphere, such as an aircraft. The aircraft station may be a device mounted on an aircraft or the like, or may be the aircraft itself. Note that the concept of aircrafts includes not only heavier-than-air aircrafts such as airplanes and gliders, but also lighter-than-air aircrafts such as balloons and airships. The concept of aircrafts also includes not only heavier-than-air aircrafts and lighter-than-air aircrafts but also rotorcrafts such as helicopters and autogyros. Note that the aircraft station (or the aircraft on which the aircraft station is mounted) may be an Unmanned Aerial Vehicle (UAV) such as a drone.

Note that the concept of unmanned aerial vehicles includes Unmanned Aircraft Systems (UAS) and tethered unmanned aircraft systems (tethered UAS). The concept of unmanned aerial vehicles includes Lighter than Air (LTA) UASs and Heavier than Air (HTA) UASs. In addition, the concept of unmanned aerial vehicles includes High Altitude UAS Platforms (HAPs).

Fig. 8 is a diagram illustrating a configuration example of the non-ground station 30 according to an embodiment of the present disclosure. The non-ground station 30 includes a radio communication section 31, a storage section 32, and the control section 33. The configuration illustrated in Fig. 8 is a functional configuration, and may be different from a hardware configuration. The functions of the non-ground station 30 may be distributedly implemented in a plurality of physically separate configurations.

The radio communication section 31 is a radio communication interface that performs radio communication with other radio communication devices (for example, the ground station 20, the relay station 40, the terminal device 50, and another non-ground station 30). The radio communication section 31 supports one or more radio access schemes. For example, the radio communication section 31 supports at least one of NR, LTE, or 6G. The radio communication section 31 may support W-CDMA and/or cdma 3000 in addition to NR, LTE, and 6G.

The radio communication section 31 includes a reception processing section 311, a transmission processing section 312, and an antenna 313. The radio communication section 31 may include a plurality of reception processing sections 311, a plurality of transmission processing sections 312, and a plurality of antennas 313. Note that, in a case where the radio communication section 31 supports a plurality of radio access schemes, each section of the radio communication section 31 may be individually configured for each radio access scheme. For example, the reception processing section 311 and the transmission processing section 312 may be individually configured for each of LTE, NR, and 6G. The configurations of the reception processing section 311, the transmission processing section 312, and the antenna 313 are similar to the configurations of the reception processing section 211, the transmission processing section 212, and the antenna 213 described above. Note that the radio communication section 31 may be configured to be capable of beamforming, similarly to the radio communication section 21. At this time, the radio communication section 31 may be configured to be capable of polarization beamforming, similarly to the radio communication section 21. The radio communication section 31 may also be configured to be able to transmit and receive a spatially multiplexed signal, similarly to the radio communication section 21.

The storage section 32 is a storage device capable of data reading and data writing, such as a DRAM, an SRAM, a flash memory, or a hard disk. The storage section 32 functions as a storage means of the non-ground station 30.

The control section 33 is a controller that controls each section of the non-ground station 30. The control section 33 is implemented by, for example, a processor such as a CPU, an MPU, or a GPU. For example, the control section 33 is implemented by the processor executing various programs stored in the storage device inside the non-ground station 30 using the RAM or the like as a work area. Note that the control section 33 may be implemented by an integrated circuit such as an ASIC or an FPGA. The control section 33 may also be implemented by a GPU. Any of the CPU, the MPU, the ASIC, the FPGA, and the GPU can be regarded as a controller. Note that the control section 33 may include a plurality of physically separate objects. For example, the control section 33 may include a plurality of semiconductor chips.

The control section 33 includes a notification section 331, a reception section 332, a transmission section 333, and a communication control section 334. Blocks (notification section 331 to communication control section 334) constituting the control section 33 are functional blocks respectively indicating functions of the control section 33. The functional blocks may be software blocks or hardware blocks. For example, each of the above-described functional blocks may be one software module implemented by software (including a microprogram) or may be one circuit block on a semiconductor chip (die). Of course, each functional block may be one processor or one integrated circuit. The control section 33 may include functional units different from the above-described functional blocks. The method of configuring the functional blocks is arbitrary.

Note that the operation of the control section 33 may be similar to the operation of the control section 53 of the terminal device 50. In addition, the operation of the control section 33 may be similar to the operation of the control section 13 of the management device 10, may be similar to the operation of the control section 23 of the ground station 20, or may be similar to the operation of the control section 43 of the relay station 40.

### 2-4. Configuration Example of Base Station

At least one of the ground station 20 or the non-ground station 30 may operate as a base station. In a case where the ground station 20 is a base station, the non-ground station 30 can function as a relay station that relays communication between the base station and the terminal device 50. The ground station 20 can also function as a relay station that relays communication between the base station and the terminal device 50. In a case where the ground station 20 and/or the non-ground station 30 is used as a relay station, the configuration of the ground station 20 and/or the non-ground station 30 may be similar to the configuration of the relay station 40 described below. Hereinafter, the base station will be described.

The base station is a device corresponding to a radio base station (Base Station, Node B, eNB, gNB, 6GNB, or the like) or a radio Access Point. The base station may be a radio relay station. The base station may be an optical extension device called a Remote Radio Head (RRH). The base station may be a receiving station such as a Field Pickup Unit (FPU). The base station may be an Integrated Access and Backhaul (IAB) donor node or an IAB relay node that provides a radio access line and a radio backhaul line by time division multiplexing, frequency division multiplexing, or space division multiplexing.

Note that the radio access technology used by the base station may be a cellular communication technology or a wireless LAN technology. Of course, the radio access technology used by the base station is not limited to the above-described technologies, and may be any of other radio access technologies. For example, the radio access technology used by the base station may be a Low Power Wide Area (LPWA) communication technology. The radio communication used by the base station may be radio communication using millimeter waves or radio communication using terahertz waves. The radio communication used by the base station may also be radio communication using radio waves or radio communication (optical radio communication) using infrared rays or visible light.

The base station according to the present embodiment may be capable of Non-Orthogonal Multiple Access (NOMA) communication with another communication device (for example, the terminal device 50). Here, the NOMA communication is communication (transmission, reception, or both) using non-orthogonal resources. Note that the base station may be capable of NOMA communication with another base station. Here, the non-orthogonal resource is a resource on an axis different from that of orthogonal resources (time, frequency, and space), and is a radio resource capable of separating different signals using, for example, scrambling, interleaving, a code (for example, a spreading code, a sparse code, or the like), a power difference, or the like.

The base stations according to the present embodiment may be capable of inter-communicating with the core networks via a base station-core network interface (for example, S1 Interface or the like). The interface may be wired or wireless. The base station may be able to inter-communicate with another base station via an inter-base station interface (e.g., X2 Interface, Xn Interface, X2 Interface, F1 Interface, etc.). The interface may be wired or wireless.

Note that the concept of the base station (also referred to as a base station device) includes not only a donor base station but also a relay base station (also referred to as a relay station or a relay station). At this time, the relay base station may be any one of an RF Repeater, a Smart Repeater, and an Intelligent Surface. The concept of the base station includes not only a structure having the function of the base station but also a device installed in the structure.

The structure is, for example, a building such as a high-rise building, a house, a steel tower, a station facility, an airport facility, a port facility, an office building, a school building, a hospital, a factory, a commercial facility, or a stadium. The concept of the structure includes not only a building but also a non-building structure such as a tunnel, a bridge, a dam, a fence, or an iron pole, and equipment such as a crane, a gate, or a windmill. The concept of the structure also includes not only a structure on land (on the ground in a narrow sense) or in the ground but also an on-the-water structure such as a pier or a megafloat and an underwater structure such as a marine observation facility. The base station can be rephrased as an information processing device.

The base station may be a donor station or a relay station. The base station may also be a fixed station or a mobile station. The mobile station is a radio communication device (for example, a base station) configured to be movable. At this time, the base station may be a device installed in the mobile body or may be the mobile body itself. For example, a relay station having mobility can be regarded as a base station as a mobile station. The base station as a mobile station also corresponds to a device that originally has mobility and has functions of a base station (at least some of the functions of the base station), such as a vehicle, an Unmanned Aerial Vehicle (UAV), or a smartphone. An example of the UAV is a drone.

Here, the mobile body may be a mobile terminal such as a smartphone or a mobile phone. The mobile body may also be a mobile body that moves on land (on the ground in a narrow sense) (for example, a vehicle such as an automobile, a bicycle, a bus, a truck, a motorcycle, a train, or a linear motor car), or may be a mobile body that moves underground (for example, in a tunnel) (for example, a subway). The mobile body may also be a mobile body that moves on the water (for example, a ship such as a passenger ship, a cargo ship, or a hovercraft) or may be a mobile body that moves underwater (for example, a submersible vessel such as a submersible, a submarine, or an unmanned underwater vehicle). The mobile body may also be a mobile body (for example, an aircraft such as an airplane, an airship, or a drone) that moves in the atmosphere. The mobile body may also be capable of floating in the air or in space.

The base station may be a ground base station (ground station) installed on the ground. For example, the base station may be a base station deployed in a structure on the ground, or may be a base station installed in a mobile body that moves on the ground. More specifically, the base station may be an antenna installed in a structure such as a building and a signal processing device connected to the antenna. Of course, the base station may be a structure or a mobile body itself. The term "on the ground" means not only on land (on the ground in a narrow sense) but also on the ground in a broad sense including underground, on the water, and underwater. Note that the base station is not limited to a ground base station. For example, in a case where the communication system 1 is a satellite communication system, the base station may be an aircraft station. From the perspective of a satellite station, an aircraft station located on the earth is a ground station.

The base station is not limited to the ground station. The base station may be a non-ground base station device (non-ground station) capable of floating in the air or in space. At this time, the base station may be an aircraft station or a satellite station.

The size of the coverage of a base station may range from large like a macro cell to small like a pico cell. Of course, the size of the coverage of the base station may be very small like a femtocell. The base station may have a beamforming capability. In this case, the base station may form a cell or a service area for each beam. For this purpose, the base station may be equipped with an antenna array including a plurality of antenna elements, and may be configured to provide Advanced Antenna Technology represented by Multiple Input Multiple Output (MIMO) and beamforming.

In addition to beamforming that allows a beam to have directivity, the base station may have a function of delivering a desired wave to a predetermined point in a pinpoint manner by further considering distance information from an antenna of the base station. This function may be referred to as Beam focusing or Point forming.

In the present embodiment, the base station may include a set of a plurality of physical or logical devices. For example, in the present embodiment, the base station may be divided into a plurality of devices such as a Baseband Unit (BBU) and a Radio Unit (RU), and may be interpreted as an aggregate of the plurality of devices. In the embodiments of the present disclosure, the base station may be one or both of the BBU and the RU.

The BBU and the RU may be connected by a predetermined interface (for example, eCPRI). The RU may be referred to as a Remote Radio Unit (RRU) or a Radio DoT (RD). The RU may correspond to a gNB-DU (gNB Distributed Unit) described below. The BBU may correspond to a gNB-CU (gNB Central Unit) described below. The RU may be a radio device connected to the gNB-DU described below. The gNB-CU, the gNB-DU, and the RU connected to the gNB-DU may be configured to conform to an Open Radio Access Network (O-RAN). The RU may be a device formed integrally with an antenna.

An antenna (for example, an antenna formed integrally with an RU) included in the base station may employ an Advanced Antenna System and support MIMO (for example, FD-MIMO) and beamforming. In this case, the antenna (for example, an antenna formed integrally with the RU) included in the base station may include, for example, 64 transmission antenna ports and 64 reception antenna ports.

The antenna mounted on the RU may be an antenna panel including one or more antenna elements, and the RU may be equipped with one or more antenna panels. For example, the RU may be equipped with two types of antenna panels, that is, a horizontally polarized antenna panel and a vertically polarized antenna panel, or two types of antenna panels, that is, a right-hand circularly polarized antenna panel and a left-hand circularly polarized antenna panel. The RU may form and control an independent beam for each antenna panel.

Note that a plurality of base stations may be connected to one another. One or more base stations may be included in a Radio Access Network (RAN). That is, the base station may be simply referred to as a RAN, a RAN node, an Access Network (AN), or an AN node. The RAN in LTE is referred to as an Enhanced Universal Terrestrial RAN (EUTRAN). The RAN in NR is referred to as NGRAN. The RAN in W-CDMA (UMTS) is referred to as UTRAN.

The base station in LTE is sometimes referred to as an Evolved Node B (eNodeB) or an eNB. At this time, the EUTRAN includes one or more eNodeBs (eNBs). The base station in NR may be referred to as gNodeB or gNB. At this time, the NGRAN includes one or more gNBs. The base station in 6G may be referred to as 6GNodeB, 6gNodeB, 6GNB, or 6gNB. At this time, the 6GRAN includes one or more 6GNBs. The EUTRAN may include a gNB (en-gNB) connected to a core network (EPC) in an LTE communication system (EPS). Similarly, the NGRAN may include an ng-eNB connected to a core network 5GC in a 5G communication system (5GS).

Note that in a case where the base station is an eNB, a gNB, or a 6GNB, the base station may be referred to as 3GPP Access. In a case where the base station is a radio Access Point, the base station may be referred to as Non 3GPP Access. The base station may also be an optical extension device referred to as a Remote Radio Head (RRH) or a Radio Unit (RU). In a case where the base station is a gNB, the base station may be a combination of a gNB-Central Unit (CU) and a gNB-Distributed Unit (DU) described above, or any one of these.

Here, the gNB-CU hosts a plurality of higher layers among Access Strata for communication with the UE. Here, the higher layers are, for example, Radio Link Control (RRC), a Service Data Adaptation Protocol (SDAP), and a Packet Data Convergence Protocol (PDCP). On the other hand, the gNB-DU hosts a plurality of lower layers among the access strata. Here, the lower layers are, for example, Radio Link Control (RLC), Medium Access Control (MAC), and a Physical layer (PHY). That is, the gNB-CU may generate some of messages/pieces of information as RRC signaling (quasi-static notification), and the gNB-DU may generate the rest of the messages/pieces as MAC CEs or DCI (dynamic notification). In RRC configurations (quasi-static notification), the gNB-DU may generate some of the configurations, for example, IE: cellGroupConfig, and the gNB-CU may generate the remaining configurations. These configurations may be transmitted and received over an F1 interface.

The base station may be configured to be able to communicate with another base station. For example, in a case where a plurality of base stations are a combination of eNBs or a combination of an eNB and an en-gNB, the base stations may be connected via an X2 interface. In a case where the plurality of base stations are a combination of gNBs or a combination of an ng-eNB and a gNB, these devices may be connected via an Xn interface. In a case where the plurality of base stations are a combination of a gNB-Central Unit (CU) and a gNB-Distributed Unit (DU), these devices may be connected by the above-described F1 interface. The plurality of base stations may communicate, e.g., via an X2, Xn, of F1 interface, the messages/pieces of information described below (e.g., RRC signaling), MAC Control Elements (CEs), or Downlink Control Information (DCI)).

For example, in the embodiments described below, the ground station and the non-ground station may both be gNBs or both be eNBs. In the embodiments described below, one of the ground station and the non-ground station may be a gNB and the other may be an eNB. In the embodiments described below, one of the ground station and the non-ground station may be a gNB-CU and the other may be a gNB-DU. In a case where the non-ground station is a gNB and the ground station is an eNB, the gNB of the non-ground station (satellite station) may perform connected mobility (handover) or Dual Connectivity by coordination (e.g., X2 signaling, Xn signaling) with the eNB of the ground station. In a case where the non-ground station is a gNB-DU and the ground station is a gNB-CU, the gNB-DU of the non-ground station (e.g., a satellite station) may constitute a logical gNB by coordination (e.g., F1 signaling) with the gNB-CU of the ground station.

A cell provided by the base station is referred to as a serving cell. The serving cell includes a Primary Cell (PCell) and a Secondary Cell (SCell). In a case where dual connectivity is configured for a UE (e.g., the terminal device 50), a PCell and zero or one or more SCells provided by a Master Node (MN) may be referred to as a Master Cell Group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity (NNDC). Examples of dual connectivity further include NR-6G dual connectivity and 6G-NR dual connectivity.

Note that the serving cell may include Primary Secondary Cell or a Primary SCG Cell (PSCell). That is, in a case where dual connectivity is configured for the UE, a PSCell provided by a Secondary Node (SN) and zero or one or more SCells may be referred to as a Secondary Cell Group (SCG).

Unless a special configuration (for example, PUCCH on SCell) is provided, the physical uplink control channel (PUCCH) is transmitted in the PCell and the PSCell, but is not transmitted in the SCell. A Radio Link Failure is also detected in the PCell and the PSCell, but is not detected (may not need to be detected) in the SCell. As described above, the PCell and the PSCell have a special role in the serving cell, and thus are also referred to as Special Cells (SpCells).

One cell may be associated with one Downlink Component Carrier and one Uplink Component Carrier. A system bandwidth corresponding to one cell may be divided into a plurality of Bandwidth Parts (BWPs). At this time, one or more BWPs may be configured for the UE, and one BWP may be used as an active BWP for the UE. Radio resources (for example, a frequency band, numerology (subcarrier spacing), and a slot format (Slot configuration)) that can be used by the terminal device 50 may be different for each cell, each component carrier, or each BWP.

### 2-5. Configuration Example of Relay Station

Now, the configuration of the relay station 40 will be described.

The relay station 40 is a radio communication device that performs radio communication with other communication devices such as the management device 10, the ground station 20, the non-ground station 30, and the terminal device 50. The relay station 40 relays communication between the non-ground station 30 and a communication device on the ground (for example, the management device 10, the ground station 20, or the terminal device 50). The relay station 40 may be a ground station or a non-ground station. At this time, the relay station 40 may have a configuration similar to that of the ground station 20 or may have a configuration similar to that of the non-ground station 30.

The relay station 40 of the present embodiment is, for example, a layer 3 relay, and is different from a known layer 1 relay that only amplifies the power of a received RF signal. Here, the layer 3 relay is a relay that can decode up to layer 3. Note that the relay station 40 may be a smart repeater. Unlike the known layer 1 relay, the smart repeater is a relay also capable of controlling the physical layer (PHY) and the like. Besides, the description of the relay station appearing in the following description can be replaced with another description indicating the relay station such as a relay or a relay device.

Note that the relay station 40 may be a fixed device or a movable device. At this time, the relay station 40 may be a floatable device. The coverage of the relay station 40 is not limited to a specific size. For example, the cell covered by the relay station 40 may be a macro cell, a micro cell, or a small cell. Of course, the size of the coverage of the relay station 40 may be very small, like a femtocell. The relay station 40 may also have a beamforming capability. At this time, the relay station 40 may include a cell or a service area formed for each beam.

The relay station 40 is not limited to a device on which the relay station 40 is mounted as long as the relay function is satisfied. For example, the relay station 40 may be mounted on a terminal device such as a smartphone, may be mounted on a vehicle such as an automobile, a train, or a rickshaw, may be mounted on a flying object (floating object) such as a balloon, an airplane, or a drone, may be mounted on equipment such as a traffic light, a sign, or a street light, or may be mounted on a home appliance such as a television, a game machine, an air conditioner, a refrigerator, or a lighting fixture. The relay station may also be provided on an outer wall of an architectural structure (for example, a building). With the relay station provided on the outer wall of the building, even in a case where a shielding object is present between the base station and the terminal device, a signal from the base station can be transferred by the relay station provided on the outer wall of the building and reach the terminal device.

In addition, the relay station 40 may be a device installed in a mobile body, or may be a mobile body itself, similarly to the base station described above. As described above, the mobile body may be a mobile terminal such as a smartphone or a mobile phone. The mobile body may also move on land (on the ground in a narrow sense) or may move underground. Of course, the mobile body may move on the water or may move underwater. In addition, the mobile body may move in the atmosphere or may move in outer space. The relay station 40 may be a ground station device or a non-ground station device. At this time, the relay station 40 may be an aircraft station or a satellite station.

The relay station 40 may also be an aircraft station or an earth station. The aircraft station is a radio station installed on the ground or a mobile body moving on the ground to communicate with the aircraft station. The earth station is a radio station located on the earth (including the air) to communicate with a satellite station (space station). The earth station may be a large earth station or a small earth station such as a Very Small Aperture Terminal (VSAT).

Note that the earth station may be a VSAT control earth station (also referred to as a master station or a HUB station) or may be a VSAT earth station (also referred to as a slave station). The earth station may also be a radio station installed on a mobile body that moves on the ground. Examples of an earth station mounted on a ship include Earth Stations on board Vessels (ESV). The earth stations may also include an aircraft earth station that is installed in an aircraft (including a helicopter) and communicates with the satellite station. The earth stations may also include an aviation earth station that is installed in a mobile body moving on the ground and communicates with an aircraft earth station via a satellite station.

Note that the relay station 40 may be a portable radio station that communicates with a satellite station or an aircraft station.

Fig. 9 is a diagram illustrating a configuration example of the relay station 40 according to an embodiment of the present disclosure. The relay station 40 includes a radio communication section 41, a storage section 42, a control section 43, and a network communication section 44. Note that the configuration illustrated in Fig. 9 is a functional configuration and may be different from a hardware configuration. The functions of the relay station 40 may be distributedly implemented in a plurality of physically separate configurations.

The radio communication section 41 is a signal processing section for performing radio communication with other radio communication devices (for example, the ground station 20, the non-ground station 30, the relay station 40, the terminal device 50, and another relay station 40). The radio communication section 41 operates according to the control of the control section 43. The radio communication section 41 includes a reception processing section 411, a transmission processing section 412, and an antenna 413. The configurations of the radio communication section 41, the reception processing section 411, the transmission processing section 412, and the antenna 413 may be similar to the configurations of the radio communication section 21, the reception processing section 211, the transmission processing section 212, and the antenna 213 of the ground station 20. The radio communication section 41 may be configured to be capable of beamforming, similarly to the radio communication section 21. At this time, the radio communication section 41 may be configured to be capable of polarization beamforming, similarly to the radio communication section 21. The radio communication section 41 may also be configured to be able to transmit and receive a spatially multiplexed signal, similarly to the radio communication section 21.

The storage section 42 is a storage device capable of reading and writing data, such as a DRAM, an SRAM, a flash memory, or a hard disk. The storage section 42 functions as a storage means of the relay station 40.

The control section 43 is a controller that controls each section of the relay station 40. The control section 43 is implemented by, for example, a processor such as a CPU, an MPU, or a GPU. For example, the control section 43 is implemented by the processor executing various programs stored in the storage device inside the relay station 40 using a RAM or the like as a work area. Note that the control section 43 may be implemented by an integrated circuit such as an ASIC or an FPGA. The control section 43 may also be implemented by a GPU. Any of the CPU, the MPU, the ASIC, the FPGA, and the GPU can be regarded as a controller. Note that the control section 43 may include a plurality of physically separate objects. For example, the control section 43 may include a plurality of semiconductor chips.

Note that the operation of the control section 43 of the relay station 40 may be similar to the operation of the control section 23 of the ground station 20 or the control section 33 of the non-ground station 30. Conversely, the operation of the control section 23 of the ground station 20 or the control section 33 of the non-ground station 30 may be similar to the operation of the control section 43 of the relay station 40. In addition, the operation of the control section 43 may be similar to the operation of the control section 13 of the management device 10, or may be similar to the operation of the control section 53 of the terminal device 50.

The network communication section 44 is a communication interface for communicating with other devices. The network communication section 44 is, for example, a network interface. For example, the network communication section 44 is a LAN interface such as an NIC. Note that the network communication section 44 may be a wired interface or a wireless interface. The network communication section 44 functions as a communication means of the relay station 40. The network communication section 44 communicates with the management device 10, the ground station 20, and the like according to the control of the control section 43.

### 2-6. Configuration Example of Terminal Device

Now, a configuration of the terminal device 50 will be described.

The terminal device 50 is a radio communication device that performs radio communication with other communication devices such as the ground station 20 and the non-ground station 30. Any type of computer can be adopted as the terminal device 50. The terminal device 50 may be a mobile terminal such as a mobile phone, a smart device (a smartphone or a tablet), a Personal Digital Assistant (PDA), or a notebook PC. The terminal device 50 may also be a game machine having a communication function. The terminal device 50 may also be an imaging device (for example, a camcorder) having a communication function. The terminal device 50 may be a motorcycle, a mobile relay car, or the like on which communication equipment such as a Field Pickup Unit (FPU) is mounted. The terminal device 50 may also be a Machine to Machine (M2M) device or an Internet of Things (IoT) device. The terminal device 50 may also be a wearable device such as a smart watch.

Note that the terminal device 50 may be an xR device such as an Augmented Reality (AR) device, a Virtual Reality (VR) device, or a Mixed Reality (MR) device. At this time, the xR device may be a glasses-type device such as AR glasses or MR glasses, or may be a head-mounted device such as a VR head-mounted display. In a case where the terminal device 50 is an xR device, the terminal device 50 may be a stand-alone device including only a user-worn portion (for example, a glasses portion). The terminal device 50 may be a terminal linked device including a user-worn portion (for example, a glasses portion) and a terminal portion (for example, a smart device) linked to the user-worn portion.

Note that the terminal device 50 may be configured to be connectable to a plurality of communication paths. For example, the terminal device 50 may be configured to be connectable to two communication paths of Wi-Fi (trade name) and a cellular network. The terminal device 50 may be connectable to a plurality of cellular networks. At this time, the plurality of cellular networks may include a first cellular network including a terrestrial network and a second cellular network including a non-terrestrial network. At this time, the plurality of cellular networks may be associated with different Subscriber Identity Modules (SIMs).

Note that the terminal device 50 may be configured to be switchable among a plurality of SIM cards for use. For example, the terminal device 50 may correspond to a dual SIM or a triple SIM. Of course, the terminal device 50 may be configured to allow more than three SIM cards to be inserted into the terminal device 50. The terminal device 50 may also support Remote SIM Provisioning (RSP). For example, the terminal device 50 may support an embedded SIM (eSIM). The RSP terminal device can rewrite information related to radio communication (hereinafter referred to as a profile) without replacing the SIM card.

Note that the terminal device 50 may be capable of NOMA communication with the ground station 20. The terminal device 50 may also be able to use an automatic retransmission technology such as HARQ when communicating with the ground station 20. The terminal device 50 may be capable of sidelink communication with another terminal device 50. The terminal device 50 may also be able to use an automatic retransmission technology such as HARQ when performing sidelink communication. Note that the terminal device 50 may also be capable of NOMA communication in communication (sidelink) with another terminal device 50. The terminal device 50 may also be capable of LPWA communication with other communication devices (for example, the ground station 20 and another terminal device 50). The radio communication used by the terminal device 50 may be radio communication using millimeter waves. Note that the radio communication (including sidelink communication) used by the terminal device 50 may be radio communication using radio waves, or may be radio communication (optical radio communication) using infrared rays or visible light.

The terminal device 50 may be a mobile device (mobile station). A mobile device is a mobile radio communication device. At this time, the terminal device 50 may be a radio communication device installed in a mobile body, or may be the mobile body itself. For example, the terminal device 50 may be a vehicle that moves on a road, such as an automobile, a bus, a truck, or a motorcycle, a vehicle that moves on a rail installed on a track, such as a train, or a radio communication device mounted on the vehicle. Note that the mobile body may be a mobile terminal such as a smartphone. The mobile body may move on land (on the ground in a narrow sense), in the ground, on the water, or underwater. The mobile body may also be a mobile body that moves in the atmosphere, such as an aircraft, an airship, a balloon, or a helicopter, or may be a mobile body that moves in outer space, such as an artificial satellite. The mobile body may be an Unmanned Aerial Vehicle (UAV) such as a drone. The terminal device 50 may be a radio communication device mounted on a mobile body, such as an aircraft, an airship, a balloon, or a helicopter, that moves in the atmosphere, a mobile body, such as an artificial satellite, that moves in outer space, or a mobile body such as an Unmanned Aerial Vehicle (UAV), examples of which include a drone.

The terminal device 50 may simultaneously connect to a plurality of base stations or a plurality of cells for communication. For example, in a case where one base station supports a communication area via a plurality of cells (for example, pCells and sCells), the base station and the terminal device 50 may communicate with each other by aggregating the plurality of cells by a Carrier Aggregation (CA) technology, a Dual Connectivity (DC) technology, and/or a Multi-Connectivity (MC) technology. Alternatively, the terminal device 50 and a plurality of base stations may communicate with each other via cells of different base stations by a coordinated multi-point transmission and reception (CoMP) technology.

Fig. 10 is a diagram illustrating a configuration example of the terminal device 50 according to an embodiment of the present disclosure. The terminal device 50 includes a radio communication section 51, a storage section 52, and a control section 53. Note that the configuration illustrated in Fig. 10 is a functional configuration and may be different from a hardware configuration. The functions of the terminal device 50 may also be distributedly implemented in a plurality of physically separate configurations.

The radio communication section 51 is a signal processing section for performing radio communication with other radio communication devices (for example, the ground station 20, the non-ground station 30, the relay station 40, and another terminal device 50). The radio communication section 51 operates according to the control of the control section 53. The radio communication section 51 includes a reception processing section 511, a transmission processing section 512, and an antenna 513. The configurations of the radio communication section 51, the reception processing section 511, the transmission processing section 512, and the antenna 513 may be similar to those of the radio communication section 21, the reception processing section 211, the transmission processing section 212, and the antenna 213 of the ground station 20. The radio communication section 51 may be configured to be capable of beamforming, similarly to the radio communication section 21. At this time, the radio communication section 51 may be configured to be capable of polarization beamforming, similarly to the radio communication section 21. The radio communication section 51 may also be configured to be able to transmit and receive a spatially multiplexed signal, similarly to the radio communication section 21.

The storage section 52 is a storage device capable of reading and writing data, such as a DRAM, an SRAM, a flash memory, or a hard disk. The storage section 52 functions as a storage means of the terminal device 50.

The control section 53 is a controller that controls each section of the terminal device 50. The control section 53 is implemented by a processor such as a CPU, an MPU, or a GPU. For example, the control section 53 is implemented by the processor executing various programs stored in the storage device inside the terminal device 50 using a RAM or the like as a work area. Note that the control section 53 may be implemented by an integrated circuit such as an ASIC or an FPGA. The control section 53 may also be implemented by a GPU. Any of the CPU, the MPU, the ASIC, the FPGA, and the GPU can be regarded as a controller. Note that the control section 53 may include a plurality of physically separate objects. For example, the control section 53 may include a plurality of semiconductor chips.

The control section 53 includes an acquisition section 531, a configuration section 532, a switching processing section 533, and a communication control section 534. Each of the blocks (the acquisition section 531 to the communication control section 534) constituting the control section 53 is a functional block indicating a function of the control section 53. The functional blocks may be software blocks or hardware blocks. For example, each of the above-described functional blocks may be one software module implemented by software (including a microprogram) or may be one circuit block on a semiconductor chip (die). Of course, each functional block may be one processor or one integrated circuit. The control section 53 may include functional units different from the above-described functional blocks. The method of configuring the functional blocks is arbitrary. The operation of each functional block will be described below.

Note that the operation of each block (the acquisition section 531 to the communication control section 534) constituting the control section 53 may be similar to the operation of (the notification section 331 to the communication control section 334) included in the control section 33 of the non-ground station 30. In addition, the operation of the control section 53 may be similar to the operation of the control section 13 of the management device 10, may be similar to the operation of the control section 23 of the ground station 20, or may be similar to the operation of the control section 43 of the relay station 40.

### 3. Basic Operation of Communication System

The configuration of the communication system 1 has been described above, and basic operation of the communication system 1 will be described before operation of the communication system 1 of the present embodiment is described in detail.

Note that, in the following description, the base station is assumed to be the non-ground station 30. Note that the non-ground station 30 in the following description can be replaced with a gateway. The non-ground station 30 in the following description can be replaced with the ground station 20 or the relay station 40.

### 3-1. Initial Connection Processing

First, initial connection processing will be described.

The initial connection processing is processing for causing a radio connection state of the terminal device 50 to transition from an Unconnected state to a Connected state. The Unconnected state is, for example, RRC_IDLE or RRC_INACTIVE. RRC_IDLE is an idle state in which the terminal device is not connected to any cell, and is also referred to as an Idle mode. RRC_INACTIVE is a radio connection state indicating an inactive state newly defined in NR, and is also referred to as an Inactive mode. In RRC_INACTIVE, although the RRC connection itself is not established between the terminal device 50 and the base station, the terminal device 50 and the base station may maintain a state in which the terminal device 50 and the base station mutually hold some UE contexts. The terminal device 50 and the base station may use any of the held UE contexts to expedite the transition of the terminal device 50 to the Connected state to be reperformed. Note that the unconnected state may include a Lightning mode. The connected state is, for example, RRC_CONNECTED. RRC_CONNECTED is a connected state in which the terminal device has an established connection to a specific cell (for example, a Primary Cell), and is also referred to as a CONNECTED mode.

Fig. 11 is a flowchart illustrating an example of the initial connection processing. Hereinafter, the initial connection processing will be described with reference to Fig. 11. The initial connection processing described below is executed, for example, in a case where the terminal device 50 is powered on.

First, the terminal device 50 in the unconnected state performs a cell selection procedure (cell search). The cell selection procedure (cell search) is a procedure for a User Equipment (UE) for detecting a Physical Cell ID (PCI) of a cell and obtaining time and frequency synchronization. The cell search according to the present embodiment includes steps of detecting a synchronization signal and decoding a Physical Broadcast Channel (PBCH). The terminal device 50 detects the synchronization signal of the cell (step S11).

The terminal device 50 performs synchronization with the cell in the downlink based on the detected synchronization signal. After establishing downlink synchronization, the terminal device 50 attempts to decode the PBCH and acquires a Master Information Block (MIB) which is a part of system information (step S12).

The system information is information for broadcasting a configuration in a cell that transmits the system information. The system information may be information common to all the terminal devices 50 belonging to the cell. The system information may be information specific to the cell. The system information includes, for example, information related to access to a cell, information related to cell selection, information related to other RATs and other systems, and the like. The system information includes an MIB and a System Information Block (SIB). The MIB is information necessary for receiving the SIB and the like, and is information of a fixed size of a payload broadcast by the PBCH. The MIB includes a part of a system frame number, information of a subcarrier spacing of predetermined information (for example, SIB1, Msg. 2/Msg. 4 for initial connection, paging, and a broadcast SI message), information of a subcarrier offset, information of a position of DMRS type A, a PDCCH configuration for at least SIB1, information of cell barred, information of intra-frequency reselection, and the like. The SIB is system information other than the MIB, and is broadcast by the PDSCH.

Note that the system information can be classified into first system information, second system information, and third system information. The first system information and the second system information include information related to access to a cell, information related to acquisition of other system information, and information related to cell selection. Information included in the MIB is the first system information. Information included in the SIB1 of the SIB is the second system information (for example, Remaining Minimum SI). The remaining system information is the third system information (for example, Other SI).

In NR, the system information is broadcast from the NR cell. The physical channel carrying the system information may be transmitted in a slot or a mini-slot. The mini-slot is defined by fewer symbols than the slot. By transmitting the physical channel carrying the system information in the mini-slot, the time necessary for beam sweep is shortened, and overhead can be reduced. In the case of NR, the first system information is transmitted on an NR-PBCH, and the second system information is transmitted on a physical channel different from the NR-PBCH.

The terminal device 50 acquires the second system information based on the MIB (that is, the first system information) (step S13). As described above, the second system information includes SIB1 and SIB2.

The SIB1 is access restriction information for a cell and scheduling information of the system information other than the SIB1. In the case of NR, the SIB1 includes information related to cell selection (for example, cellSelectionInfo), information related to cell access (for example, cellAccessRelatedInfo), information related to connection establishment failure control (for example, connEstFailureControl), scheduling information of the system information other than the SIB1 (for example, si-SchedulingInfo), configuration of a serving cell, and the like. The configuration of the serving cell includes cell-specific parameters, and includes a downlink configuration, an uplink configuration, TDD configuration information, and the like. The uplink configuration includes a RACH configuration and the like. In the case of LTE, the SIB1 includes cell access information, cell selection information, maximum uplink transmission power information, TDD configuration information, a periodicity of system information, mapping information of system information, a length of a System Information (SI) window, and the like.

In the case of NR, the SIB2 includes cell reselection information (for example, cellReselectionInfoCommon) and cell reselection serving frequency information (for example, cellReselectionServingFreqInfo). In the case of LTE, the SIB2 includes connection barring information, radio resource configuration information common to cells (radioResourceConfigCommon), uplink carriers information, and the like. The cell-common radio resource configuration information includes configuration information of a cell-common PRACH (Physical Random Access Channel) and RACH (Random Access Channel).

Note that, in a case where the terminal device 50 fails to acquire the system information necessary for establishing the link, the terminal device 50 determines that access to the cell is barred. For example, in a case of failing to acquire the first system information, the terminal device 50 determines that access to the cell is barred. At this time, the terminal device 50 ends the initial connection processing.

In a case of successfully acquiring the system information, the terminal device 50 executes a Random Access Procedure based on the first system information and/or the second system information (step S14). The random access procedure may be referred to as a Random Access Channel (RACH) procedure or an RA procedure.

The random access procedure includes steps of transmitting a random access preamble, receiving a random access response, transmitting Message 3, and receiving Contention Resolution.

First, the terminal device 50 selects a predetermined Physical Random Access Channel (PRACH) preamble and transmits the preamble to the non-ground station 30. Then, the terminal device 50 receives a Physical Downlink Shared Channel (PDSCH) including a random access response corresponding to the PRACH preamble. Then, the terminal device 50 transmits the PUSCH including Message 3 by using a resource scheduled by a random access response grant included in the random access response. Finally, the terminal device 50 receives the PDSCH including a contention resolution corresponding to the PUSCH.

Message 3 includes a Radio Resource Control (RRC) message of RRC connection request. The contention resolution includes an RRC message of RRC connection setup. In a case of receiving the RRC message of RRC connection setup, the terminal device 50 performs an RRC connection operation and transitions from an RRC idle state to an RRC connected state. After transitioning to the RRC connected state, the terminal device 50 transmits an RRC message of RRC connection setup complete to the non-ground station 30. This series of operations allows the terminal device 50 to connect to the non-ground station 30.

Note that the random access preamble may be referred to as Message 1, the random access response may be referred to as Message 2, the contention resolution may be referred to as Message 4, and the RRC connection setup complete message may be referred to as Message 5.

After all the steps of the random access procedure are completed, the terminal device 50 can transition to a state of being connected to the cell (connected state).

Note that the random access procedure described above may be referred to as a 4-step random access procedure (4-step RACH procedure). On the other hand, a 2-step random access procedure (2-step RACH procedure) may refer to a random access procedure in which the terminal device 50 transmits Message 3 along with the transmission of the random access preamble, and in response, the non-ground station 30 transmits the random access response and the contention resolution.

Hereinafter, the random access procedure will be described in detail.

### 3-2. Random Access Procedure

The random access procedure is executed for the purpose of "RRC connection setup" from the idle state to the connected state (or the inactive state), a "state transition request" for a state transition from the inactive state to the connected state, and the like. The random access procedure is also used for the purpose of a "scheduling request" for requesting a resource for uplink data transmission and a "timing advance adjustment" for adjusting uplink synchronization. In addition, the random access procedure is executed in the case of an "on-demand SI request" for requesting system information that has not been transmitted, "beam recovery" for recovering a disrupted beam connection, a "handover" for switching a connected cell, and the like.

The "RRC connection setup" is an operation executed when the terminal device 50 connects to the non-ground station 30 in response to occurrence of traffic or the like. Specifically, the connection operation is an operation of passing information (for example, a UE context) related to connection from the non-ground station 30 to the terminal device 50. The UE context is managed by predetermined communication device identification information (for example, C-RNTI) indicated by the non-ground station 30. Upon completing this operation, the terminal device 50 performs a state transition from the idle state to the inactive state or from the idle state to the connected state.

The "state transition request" is an operation in which the terminal device 50 requests a state transition from the inactive state to the connected state in response to the occurrence of traffic or the like. By transitioning to the connected state, the terminal device 50 can transmit and receive unicast data to and from the non-ground station 30.

The "scheduling request" is an operation in which the terminal device 50 performs a resource request for uplink data transmission in response to the occurrence of traffic or the like. After the non-ground station 30 successfully receives the scheduling request, the non-ground station 30 assigns a resource for the PUSCH to the communication device. Note that the scheduling request is also performed by the PUCCH.

The "timing advance adjustment" is an operation for adjusting an error between a downlink frame and an uplink frame caused by a propagation delay. The terminal device 50 transmits a Physical Random Access Channel (PRACH) at a timing adjusted to the downlink frame. Accordingly, the non-ground station 30 can recognize the propagation delay with the terminal device 50, and can indicate the value of the timing advance to the terminal device 50 by Message 2 or the like.

The "on-demand SI request" is an operation of requesting the non-ground station 30 to transmit system information that has not been transmitted for the purpose of overhead of the system information or the like in a case where the terminal device 50 requires the system information.

The "beam recovery" is an operation of performing a return request in a case where communication quality is degraded due to movement of the terminal device 50, interruption of a communication path by another object, or the like after a beam is established. Upon receiving this request, the non-ground station 30 attempts to connect to the terminal device 50 using a different beam.

The "handover" is an operation of switching connection from a cell to which the terminal device 50 is connected (serving cell) to a cell adjacent to the serving cell (neighbor cell) due to a change in a radio wave environment such as movement of the terminal device 50. Upon receiving a handover command from the non-ground station 30, the terminal device 50 performs a connection request to the neighbor cell designated by the handover command.

The random access procedure includes a Contention based Random Access Procedure and a Non-contention based Random Access Procedure.

Note that the random access procedure described below is a random access procedure assuming that the RAT supported by the communication system 1 is LTE. However, the random access procedure described below is also applicable to a case where the RAT supported by the communication system 1 is other than LTE. For example, the random access procedure described below is also applicable to a case where the RAT supported by the communication system 1 is 6G.

Hereinafter, the contention based random access procedure and the non-contention based random access procedure will be described in detail.

### 3-2-1. Contention Based Random Access Procedure

The contention based random access procedure is a random access procedure performed on the initiative of the terminal device 50. Fig. 12 is a diagram illustrating a contention based random access procedure. As illustrated in Fig. 12, the contention based random access procedure is a 4-step procedure starting with transmission of the random access preamble from the terminal device 50. The contention based random access procedure includes steps of transmitting the random access preamble (Message 1), receiving the random access response (Message 2), transmitting the message (Message 3), and receiving the contention resolution message (Message 4).

First, the terminal device 50 randomly selects a preamble sequence to be used from among a plurality of preamble sequences determined in advance. Then, the terminal device 50 transmits, to the connected non-ground station 30, a message including the selected preamble sequence (Message 1: Random Access Preamble) (step S21). The random access preamble is transmitted on the PRACH.

Upon receiving the random access preamble, the non-ground station 30 transmits the corresponding random access response (Message 2: Random Access Response) to the terminal device 50. This random access response is transmitted using, for example, the PDSCH. The terminal device 50 receives the random access response (Message 2) transmitted from the non-ground station 30 (step S22). The random access response includes one or more random access preambles successfully received by the non-ground station 30, and an uplink (UL) resource corresponding to the random access preamble (hereinafter referred to as an uplink grant). The random access response also includes a Temporary Cell Radio Network Temporary Identifier (TC-RNTI), the TC-RNTI being an identifier that is temporarily assigned to the terminal device 50 by the non-ground station 30 and that is unique to the terminal device 50.

Upon receiving the random access response from the non-ground station 30, the terminal device 50 determines whether the received information includes the random access preamble transmitted in step S21. In a case that the received information includes the random access preamble, the terminal device 50 extracts the uplink grant corresponding to the random access preamble transmitted in step S21 from among the uplink grants included in the random access response. Then, the terminal device 50 transmits a UL message (Message 3: Scheduled Transmission) by using the resource scheduled by the extracted uplink grant (step S23). The transmission of the message (Message 3) is performed using the PUSCH. The message (Message 3) includes a Radio Resource Control (RRC) message for an RRC connection request. The message (Message 3) also includes the identifier of the terminal device 50.

In the contention based random access procedure, a random access preamble randomly selected by the terminal device 50 is used for the procedure. Accordingly, a case may occur in which, at the same time when the terminal device 50 transmits a random access preamble, another terminal device 50 transmits the same random access preamble to the non-ground station 30. Thus, by receiving the identifier transmitted by the terminal devices 50 in step S23, the non-ground station 30 recognizes between which terminal devices the contention of preambles has occurred and performs the contention resolution. The non-ground station 30 transmits the contention resolution (Message 4: Contention Resolution) to the terminal device 50 selected by the contention resolution. The contention resolution (Message 4) includes the identifier transmitted by the terminal device 50 in the step S23. The contention resolution (Message 4) includes an RRC message of RRC connection setup. The terminal device 50 receives the contention resolution message (Message 4) transmitted from the non-ground station 30 (step S24).

The terminal device 50 compares the identifier transmitted in step S23 with the identifier received in step S24. In a case where the identifiers do not match, the terminal device 50 reperforms the random access procedure from step S21. In a case where the identifiers match, the terminal device 50 performs the RRC connection operation and transitions from the idle state (RRC_IDLE) to the connected state (RRC_CONNECTED). The terminal device 50 uses the TC-RNTI acquired in step S22 as a Cell Radio Network Temporary Identifier (C-RNTI) in subsequent communication. After transitioning to the connected state, the terminal device 50 transmits the RRC message of RRC connection setup complete to the non-ground station 30. The RRC connection setup complete message is also referred to as Message 5. Through this series of operations, the terminal device 50 is connected to the non-ground station 30.

Note that the contention based random access procedure illustrated in Fig. 12 is a 4-step random access procedure (4-step RACH). However, the communication system 1 can also support a 2-step random access procedure (2-step RACH) as the contention based random access procedure. For example, the terminal device 50 transmits, together with the random access preamble, the message (Message 3) indicated in step S23. Then, in response to the random access preamble and the Message 3, the non-ground station 30 transmits the random access response (Message 2) and the contention resolution (Message 4). Since the random access procedure is completed in two steps, the terminal device 50 can quickly connect to the non-ground station 30.

Note that Message 1 may be denoted as "Msg1" or "Msg. 1". Message 2 may be denoted as "Msg2" or "Msg. 2". Message 3 may be denoted as "Msg3" or "Msg. 3". Message 4 may be denoted as "Msg4" or "Msg. 4".

### 3-2-2. Non-Contention Based Random Access Procedure

The non-contention based random access procedure is a random access procedure performed on the initiative of the non-ground station 30. Fig. 13 is a diagram illustrating a non-contention based random access procedure. The non-contention based random access procedure is a 3-step procedure starting with the transmission of a random access preamble assignment from the non-ground station 30. The non-contention based random access procedure includes steps of receiving the random access preamble assignment (Message 0), transmitting the random access preamble (Message 1), and receiving the random access response (Message 2).

In the contention based random access procedure, the terminal device 50 randomly selects a preamble sequence. However, in the non-contention based random access procedure, the non-ground station 30 assigns an individual random access preamble to the terminal device 50. The terminal device 50 receives an assignment of the random access preamble (Message 0: RA Preamble Assignment) from the non-ground station 30 (step S31).

The terminal device 50 executes random access to the non-ground station 30 using the random access preamble assigned in step S31. That is, the terminal device 50 transmits the assigned random access preamble (Message 1: Random Access Preamble) to the non-ground station 30 on the PRACH (step S32).

The non-ground station 30 receives the random access preamble (Message 1) from the terminal device 50. Then, the non-ground station 30 transmits, to the terminal device 50, the random access response (Message 2) to the random access preamble (step S33). The random access response includes, for example, information of the uplink grant corresponding to the received random access preamble. Upon receiving the random access response (Message 2), the terminal device 50 performs the RRC connection operation and transitions from the idle state (RRC_IDLE) to the connected state (RRC_CONNECTED).

In this way, in the non-contention based random access procedure, the non-ground station 30 schedules the random access preamble, and thus, the preamble collision is less likely to occur.

Message 0 may be denoted as "Msg0" or "Msg. 0". Message 1 may be denoted as "Msg1" or "Msg. 1". Message 2 may be denoted as "Msg2" or "Msg. 2".

### 3-3. Details of Random Access Procedure of NR

The random access procedure has been described above that assumes that the RAT supported by the communication system 1 is LTE. Note that the random access procedure described above is also applicable to RATs other than LTE. Hereinafter, a random access procedure assuming that the RAT supported by the communication system 1 is NR will be described in detail.

Note that, in the following description, four steps related to Message 1 to Message 4 illustrated in Fig. 12 or Fig. 13 will be described in detail. The step of Message 1 corresponds to step S21 illustrated in Fig. 12 and step S32 illustrated in Fig. 13. The step of Message 2 corresponds to step S22 illustrated in Fig. 12 and step S33 illustrated in Fig. 13. The step of Message 3 corresponds to step S23 illustrated in Fig. 12. The step of Message 4 corresponds to step S24 illustrated in Fig. 12.

### Random Access Preamble (Message 1) of NR

In NR, the PRACH is referred to as an NR Physical Random Access Channel (NR-PRACH). The NR-PRACH is configured using a Zadoff-Chu sequence. In NR, a plurality of preamble formats are defined as formats of the NR-PRACH. The preamble format is defined by a combination of parameters such as a subcarrier spacing of the PRACH, a transmission bandwidth, a sequence length, the number of symbols used for transmission, the number of transmission repetitions, a Cyclic Prefix (CP) length, and a guard period length. The types of preamble sequences of the NR-PRACH are numbered. The number of the type of preamble sequence is referred to as a preamble index.

In NR, the system information is used to provide the terminal device 50 in the idle state with configuration related to the NR-PRACH. Further, the terminal device 50 in the connected state is configured with the configuration related to the NR-PRACH by the dedicated RRC signaling.

The terminal device 50 transmits the NR-PRACH using a physical resource (NR-PRACH occasion) that enables the NR-PRACH to be transmitted. The physical resource is indicated by a configuration related to the NR-PRACH. The terminal device 50 selects any of the physical resources and transmits the NR-PRACH using the physical resource. Further, in a case where the terminal device 50 is in the connected state, the terminal device 50 transmits the NR-PRACH using an NR-PRACH resource. The NR-PRACH resource is a combination of an NR-PRACH preamble and a physical resource thereof. The non-ground station 30 can indicate the NR-PRACH resource to the terminal device 50.

Note that the NR-PRACH is also transmitted when the random access procedure fails. When retransmitting the NR-PRACH, the terminal device 50 waits for transmission of the NR-PRACH for a waiting period calculated from a value of backoff (backoff indicator, BI). Note that the value of the backoff may vary depending on the terminal category of the terminal device 50 or the priority of generated traffic. At this time, a plurality of backoff values are provided as notification, and the terminal device 50 selects a backoff value to be used according to the priority. When retransmitting the NR-PRACH, the terminal device 50 increases the transmission power of the NR-PRACH compared to the transmission power in the initial transmission. This procedure is referred to as power ramping.

### Random Access Response (Message 2) of NR

The random access response of NR is transmitted using an NR physical downlink shared channel (NR-PDSCH). The NR-PDSCH including the random access response is scheduled by an NR Physical Downlink Control Channel (NR-PDCCH) in which a Cyclic Redundancy Check (CRC) is scrambled with the RA-RNTI. The NR-PDCCH is transmitted in a Control Resource Set (CORESET). The NR-PDCCH in which the CRC is scrambled with the RA-RNTI is allocated in a Common Search Space (CSS) of the Type1-PDCCH CSS set. Note that the value of the Random Access Radio Network Temporary Identifier (RA-RNTI) is determined based on the transmission resource for the NR-PRACH corresponding to the random access response. The transmission resource for the NR-PRACH includes, for example, a time resource (slot or subframe) and a frequency resource (resource block). Note that the NR-PDCCH may be allocated in a search space associated with the NR-PRACH associated with the random access response. Specifically, the search space in which the NR-PDCCH is allocated is configured in association with the preamble of the NR-PRACH and/or the physical resource in which the NR-PRACH has been transmitted. The search space in which the NR-PDCCH is allocated is configured in association with the preamble index and/or the index of the physical resource. The NR-PDCCH has a Quasi co-location (QCL) relationship with an NR Synchronization signal (NR-SS).

The random access response of NR is information of Medium Access Control (MAC). The random access response of NR includes at least an uplink grant for transmitting Message 3 of NR, the value of the timing advance used for adjusting uplink frame synchronization, and the value of the TC-RNTI. The random access response of NR also includes a PRACH index used for NR-PRACH transmission corresponding to the random access response. The random access response of NR also includes information related to backoff used for waiting for transmission of the PRACH.

The non-ground station 30 transmits the random access response on the NR-PDSCH. The terminal device 50 determines whether the transmission of the random access preamble has succeeded, from the information included in the random access response. In a case of determining that the transmission of the random access preamble has succeeded, the terminal device 50 performs processing of transmitting Message 3 of NR in accordance with the information included in the random access response. On the other hand, in a case of failing to transmit the random access preamble, the terminal device 50 determines that the random access procedure has failed, and performs retransmission processing for the NR-PRACH.

Note that the random access response of NR may include a plurality of uplink grants for transmitting Message 3 of NR. The terminal device 50 can select, from among multiple uplink grants, one resource for transmitting Message 3 (Message 3). Accordingly, contention between transmissions of Message 3 of NR can be mitigated in a case where different terminal devices 50 have received the same random access response of NR. As a result, the communication system 1 can provide a more stable random access procedure.

### Message 3 of NR

Message 3 of NR is transmitted by an NR Physical Uplink Shared Channel (NR-PUSCH). The NR-PUSCH is transmitted using a resource indicated by the random access response. Message 3 of NR includes the RRC connection request message. The format of the NR-PUSCH is indicated by a parameter included in the system information. For example, the parameter determines which of Orthogonal Frequency Division Multiplexing (OFDM) and Discrete Fourier Transform Spread OFDM (DFT-s-OFDM) is used as the format of the NR-PUSCH.

In a case of normally receiving Message 3 of NR, the non-ground station 30 transitions to transmission processing of contention resolution (Message 4). On the other hand, in a case of failing to normally receive Message 3 of NR, the non-ground station 30 attempts to receive Message 3 of NR again for at least a predetermined period.

Another example of the indication of retransmission of Message 3 and the transmission resource thereof is an indication by the NR-PDCCH used for indication of retransmission of Message 3. The NR-PDCCH is an uplink grant. Downlink Control Information (DCI) of the NR-PDCCH indicates a resource for retransmission of Message 3. The terminal device 50 retransmits Message 3 based on the indication of the uplink grant.

Note that, in a case of failing to successfully receive the NR contention resolution within a predetermined period, the terminal device 50 considers the random access procedure to have failed, and performs the NR-PRACH retransmission processing. Note that the transmit beam of the terminal device 50 used for retransmission of Message 3 of NR may be different from the transmit beam of the terminal device 50 used for the initial transmission of Message 3. Note that, in a case of receiving neither the contention resolution of NR nor the indication of retransmission of Message 3 within a predetermined period, the terminal device 50 considers the random access procedure to have failed, and performs the retransmission processing for the NR-PRACH. The predetermined period is configured by, for example, the system information.

### Contention Resolution (Message 4) of NR

The contention resolution of NR is transmitted using the NR-PDSCH. The NR-PDSCH including the contention resolution is scheduled by the NR-PDCCH in which the CRC is scrambled with the TC-RNTI or the C-RNTI. The NR-PDCCH in which the CRC is scrambled with the TC-RNTI is allocated in the CSS of the Type1-PDCCH CSS set. Note that the NR-PDCCH may be allocated in a User equipment specific Search Space (USS). Note that the NR-PDCCH may be allocated in another CSS.

In a case of normally receiving the NR-PDSCH including the contention resolution, the terminal device 50 transmits an acknowledgement (ACK) to the non-ground station 30. Subsequently, the terminal device 50 considers the random access procedure to have succeeded, and transitions to the connected state (RRC_CONNECTED). On the other hand, in a case of receiving, from the terminal device 50, a negative acknowledgement (NACK) for the NR-PDSCH, or no response, the non-ground station 30 retransmits the NR-PDSCH including the contention resolution. In a case of failing to receive contention resolution (Message 4) of NR within a predetermined period, the terminal device 50 considers the random access procedure to have failed and performs processing of retransmitting the random access preamble (Message 1).

### 3-4. 2-STEP RACH of NR

Now, an example of a 2-STEP RACH procedure (hereinafter, referred to as a 2-STEP random access procedure) of NR will be described. Fig. 14 is a diagram illustrating a 2-step random access procedure. The 2-step random access procedure is configured with two steps of Message A (step S41) and Message B (step S42). As an example, Message A includes Message 1 (preamble) and Message 3 of a known 4-step random access procedure (4-STEP RACH procedure), and Message B includes Message 2 and Message 4 of the known 4-step random access procedure. As an example, Message A includes a preamble (also referred to as the PRACH) and the PUSCH, and Message B includes the PDSCH.

The 2-step random access procedure enables a random access procedure to be completed with a lower delay than the known 4-step random access procedure.

The preamble and the PUSCH included in Message A may be configured with transmission resources for the preamble and the PUSCH associated with each other, or may be configured with independent resources.

In a case where the transmission resources are configured in association with each other, for example, in a case where the transmission resource for the preamble is determined, the transmission resource for the PUSCH is uniquely determined or the transmission resources for the PUSCH that can be a plurality of candidates are determined. For example, the time and frequency offsets between the preamble of the PRACH occasion and the PUSCH occasion may be defined by one value. As another example, the time and frequency offsets between the preamble of the PRACH occasion and the PUSCH occasion are defined by different values for each preamble. The value of the offset may be determined by the specification or may be configured by the non-ground station 30 in a quasi-static manner. As an example of the values of the time and frequency offsets, for example, the values are defined by a predetermined frequency. For example, in an unlicensed band (e.g., 5 GHz band, band 45), the value of the time offset may be configured to 0 or a value approximately equal to 0. This enables Listen Before Talk (LBT) to be omitted before transmission of the PUSCH.

On the other hand, in a case where the preamble and the PUSCH are configured with independent resources, the transmission resources for the preamble and the PUSCH may be determined in the specification, the non-ground station 30 may quasi-statically configures the resources, or the resources may be determined from other information. Examples of other information include slot format information (for example, a Slot Format Indicator and the like), BWP (Band Width Part) information, preamble transmission resource information, a Slot Index, a Resource Block Index, and the like. In a case where the preamble and the PUSCH included in one Message A are configured with independent resources, the association between the preamble and the PUSCH may be provided as notification to the base station by the payload of the PUSCH or the UCI included in the PUSCH, or may be provided as notification to the non-ground station 30 by a transmission physical parameter of the PUSCH (for example, a scramble sequence of the PUSCH, a DMRS sequence and/or pattern, or the transmission antenna port of the PUSCH).

The method of configuring the transmission resources for the preamble and the PUSCH may be switched between a case of configuring the transmission resources in association with each other and a case of configuring the transmission resources with independent resources. For example, the case of configuring the transmission resources with independent resources may be applied in a licensed band, and the case of configuring the transmission resources in association with each other may be applied in an unlicensed band.

The random access procedure has been described above that assumes that the RAT supported by the communication system 1 is NR. Note that the above random access procedure is also applicable to RATs other than LTE (for example, 6G).

### 4. Operation of Communication System

The basic operation of the communication system 1 has been described above, and next, an operation of the communication system 1 that can solve the problem of the present embodiment will be described.

In the following description, specific values are indicated in some specific examples, but the values are not limited to the examples and other values may be used.

In the following description, the resource represents a Frequency, a Time, a Resource Element (including an REG, a CCE, and a CORESET), a Resource Block, a Bandwidth Part, a Component Carrier, a Symbol, a Sub-Symbol, a Slot, a Mini-Slot, a Subslot, a Subframe, a Frame, a PRACH occasion, an Occasion, a Code, a Multi-access physical resource, a Multi-access signature, Subcarrier spacing (Numerology), and the like.

The following description contains the statement that a handover is not performed, and a handover not being performed indicates, for example, that the handover command is not transmitted and the random access procedure is not performed.

In the following description, a "communication area" formed by the non-ground station 30 (for example, a non-geostationary satellite station) may be referred to as a "cell formation area". The term "cell formation area" in the following description can be replaced with the "communication area".

In the following description, "switching of connection" (for example, switching of connection from a first non-geostationary satellite station to a second non-geostationary satellite station) may be referred to as "switching of a cell formation area". The statement "information related to switching of the cell formation area" in the following description can be replaced with "information related to switching of the connection".

In the following description, "information related to switching of the connection" may be referred to as "information related to switching of the cell formation area". The statement "information related to switching of the cell formation area" in the following description can be replaced with "information related to switching of the connection".

In the following description, the non-ground station 30 is a non-geostationary satellite station, but the non-ground station 30 is not limited to a non-geostationary satellite station. For example, the non-ground station 30 may be an aircraft station. In the following description, the term "non-geostationary satellite station" appearing in the following description can be replaced with "aircraft station" or "non-ground station".

### 4-1. Overview of Processing

An overview of the processing of the communication system 1 will be described.

The communication system 1 of the present embodiment includes a base station and the terminal device 50. The base station may be the non-ground station 30 or the ground station 20. In the present embodiment, a plurality of non-geostationary satellite stations form a satellite constellation. The base station of the present embodiment may be the non-ground station 30 connected to the terminal device 50 as one of the plurality of non-geostationary satellite stations, or may be the ground station 20 connected to the terminal device 50 with one of the plurality of non-geostationary satellite stations as a relay station.

As described with reference to Fig. 1, in the present embodiment, each of the plurality of non-geostationary satellite stations forms a communication area (hereinafter, also referred to as a cell formation area) at a predetermined cell position on the ground. As described above, the terminal device 50 needs to switch the connection from the first non-geostationary satellite station to the second non-geostationary satellite station as the non-geostationary satellite stations move. Here, the first non-geostationary satellite station and the second non-geostationary satellite station are each one of a plurality of non-geostationary satellite stations forming a satellite constellation.

The base station notifies the terminal device 50 of information related to switching of the connection from the first non-geostationary satellite station to the second non-geostationary satellite station (information related to switching of the cell formation area) in advance before the terminal device switches the connection from the first non-geostationary satellite station to the second non-geostationary satellite station.

The terminal device 50 acquires information related to switching of the connection from the first non-geostationary satellite station in advance before the processing of switching from the first non-geostationary satellite station to the second non-geostationary satellite station. Then, the terminal device 50 switches the connection from the first non-geostationary satellite station to the second non-geostationary satellite station without handover (that is, without a random access procedure) based on the information related to switching of the connection.

The overview of the processing of the communication system 1 has been described above, and the operation of the communication system 1 will be described in detail below.

### 4-2. Notification of Information Related to Switching of Cell Formation Area

First, notification of the information related to switching of the cell formation area will be described.

The base station dynamically or quasi-statically notifies the terminal device 50 of the information related to switching of the cell formation area in advance (that is, before switching of the cell formation area). The dynamic notification may be a notification by downlink control information (DCI) or a MAC control element (MAC CE). The quasi-static notification may be a notification by the system information or the RRC signaling.

### Specific Example of Information Related to Switching of Cell Formation Area

The information related to switching of the cell formation area (information related to switching of the connection) may include, for example, the following information (A) to (C). The information related to switching of the cell formation area may include a part of the information indicated below or may include all of the information indicated below. Of course, the information related to switching of the cell formation area may include information other than the information described below.

### (A) Information Related to Switching Processing for Cell Formation Area

The information related to switching of the cell formation area may include information related to the processing of switching the cell formation area. The information related to the processing of switching the cell formation area is information used by the terminal device 50 for the processing of switching the connection. The information related to the processing of switching the cell formation area may be, for example, any of the following (A1) to (A4).

### (A1) Information related to the execution of switching of the cell Formation Area

The base station may transmit information related to the execution of switching of the cell formation area as the information related to switching of the cell formation area. The information related to the execution of switching of the cell formation area is information for the terminal device 50 side to determine whether to perform switching of the cell formation area.

The terminal device 50 that has received this information determines to switch the cell formation area at a predetermined timing. For example, in a case where the information related to switching of the cell formation area includes information related to the execution of switching of the cell formation area, the terminal device 50 starts the processing of switching the connection from the first non-geostationary satellite station to the second non-geostationary satellite station at a predetermined timing after receiving the information related to switching of the cell formation area.

Here, the predetermined timing may be a timing at which the terminal device 50 receives the information (information related to the execution of switching of the cell formation area), or may be a timing when a predetermined time has elapsed since the terminal device 50 received the information. Here, the predetermined time may be a time determined based on timer information or the like provided as notification in advance. The predetermined time may also be a time determined based on the information of the time offset. The predetermined time may also be a time determined based on information related to a trigger for switching the cell formation area, which will be described below.

The base station may perform notification of this information (information related to the execution of switching of the cell formation area) by using control information such as Group-Common Downlink Control Information (DCI) for the execution of switching of the cell formation area. For example, the base station may perform notification of a Group-Common Radio Network Temporary Identifier (RNTI) for the execution of switching of the cell formation area. The terminal device 50 may use this information in decoding Group-Common Downlink Control Information (DCI).

### (A2) Information related to a trigger for switching the cell formation area

The base station may transmit information related to a trigger for performing switching of the cell formation area (hereinafter also referred to as trigger information) as the information related to switching of the cell formation area. Upon receiving this information, the terminal device 50 may perform switching of the cell formation area using a trigger for switching the cell formation area. For example, the terminal device 50 may start the processing of switching the connection from the first non-geostationary satellite station to the second non-geostationary satellite station at a timing determined based on the trigger information provided as notification.

The trigger information may include information indicated in the following (1) to (5).

### (1) Timer information related to switching of the cell formation area

The trigger information may include timer information related to switching of the cell formation area. At this time, the terminal device 50 may start the switching processing at a timing determined by the timer information.

### (2) Information related to a start time to switch the cell formation area

The trigger information may include information related to the start time to switch the cell formation area. At this time, the terminal device 50 may start the switching processing in a case where the start time determined based on the information arrives.

### (3) Information related to the start time of performing a trigger detection operation related to switching of the cell formation area

The trigger information may include information related to the execution start time of the trigger detection operation related to switching of the cell formation area. At this time, the terminal device 50 may start the trigger detection operation in a case where the start time determined based on this information arrives.

### (4) Information for determining the positional relationship of the non-geostationary satellite station and/or the terminal device 50

The trigger information may include information for determining the position of the non-geostationary satellite station, such as position information, time information, orbit information, altitude information, and time information necessary for circling the earth of the non-geostationary satellite station. The trigger information may also include position information, moving velocity information, and moving direction information of the terminal device 50.

In addition, the trigger information may include position information of a non-geostationary satellite station and/or position information of the terminal device 50 which are/is regarded as trigger occurrence. For example, the trigger information may include position information of at least one of the first non-geostationary satellite station, the second non-geostationary satellite station, or the terminal device 50. Then, the terminal device 50 may start the switching processing in a case where the position of at least one of the first non-geostationary satellite station, the second non-geostationary satellite station, or the terminal device coincides with the position indicated by the position information.

### (5) Information related to communication quality

The trigger information may include information related to communication quality. For example, the trigger information may include the following information.
- Information related to reception quality (Reference Signal Received Power (RSRP), Reference Signal Received Quality (RSRQ), and the like)
- Information related to a threshold (Threshold) of communication quality (for example, RSRP)
- Information related to offset of communication quality (for example, RSRP)

### (A3) Information related to switching destinations or a switching order of cell formation areas

The base station may transmit information related to switching destinations or a switching order of cell formation areas (an application order of the information related to the cell formation areas) as the information related to switching of the cell formation area. For example, the base station may collectively notify the terminal device 50 of switching destinations of the cell formation areas. In this case, the terminal device 50 may use this information to determine in which order the cell formation areas are switched.

### (A4) Information related to a communication operation during switching of the cell formation area

The base station may transmit information related to a communication operation of the base station and/or the terminal device during switching of the cell formation area as the information related to switching of the cell formation area. For example, the base station may transmit information related to whether to stop transmission and reception during switching of the cell formation area or related to the period of time during which transmission and reception are stopped. For example, it is assumed that the base station and the terminal device 50 cannot transmit and receive data during the period of switching the cell formation area. At this time, the base station notifies the terminal device 50 of the operation during switching of the cell formation area in advance, thereby preventing a communication error. For example, the base station notifies the terminal device 50 of information indicating whether data may be transmitted during switching of the cell formation area in advance. The base station also notifies, in advance, the terminal device 50 of information indicating that a data transmission/reception barring period or the like is provided for switching the cell formation area.

### (B) Information related to communication parameters after switching of the cell formation area

The information related to switching of the cell formation area may include information related to the communication parameters after switching of the cell formation area (hereinafter, simply referred to as communication parameter information). The communication parameter information is information related to transmission parameters and/or reception parameters that the terminal device 50 uses after switching of the cell formation area.

The terminal device 50 may switch the communication parameters (transmission parameters and/or reception parameters) and performs communication after switching the cell formation area. When the terminal device 50 configures the communication parameters to be parameters suitable for the base station (satellite station) that communicates after the cell formation area is switched, the communication quality can be expected to be improved.

The communication parameter information may include information indicated in the following (1) to (10).
(1) Information related to a terminal-specific timing advance and/or information related to a cell-common timing advance after switching of the cell formation area
(2) Information related to transmission timing (frame) synchronization after switching of the cell formation area
(3) Terminal unique ID (Cell-Radio Network Temporary Identifier (C-RNTI)) after switching of the cell formation area
(4) Information related to the band after switching of the cell formation area
(5) Synchronization Signal/PBCH block index (SSB index) after switching of the cell formation area
(6) Information related to transmission weights after switching of the cell formation area
(7) Information related to the number of times of repeated transmissions after switching of the cell formation area
(8) Information related to Hybrid Automatic Repeat reQuest-disabling (HARQ-disabling) after switching of the cell formation area
(9) Information related to transmission power after switching of the cell formation area
(10) Information related to the position, orbit, time, and altitude of the satellite device after switching of the cell formation area

### (C) Information related to the random access procedure after switching of the cell formation area

The information related to switching of the cell formation area may include information related to the random access procedure after switching of the cell formation area. For example, the information related to switching of the cell formation area may include information necessary for the random access procedure after switching of the cell formation area.

### (C1) Information necessary for the random access procedure

The base station may transmit information necessary for the random access procedure after switching of the cell formation area as the information related to switching of the cell formation area. When the cell formation area is switched, the terminal device 50 basically performs the switching without executing a handover (that is, the random access procedure). However, in a case where the cell formation area is switched without executing the random access procedure, it is assumed that the terminal device 50 may be unable to normally communicate with the second non-geostationary satellite station (or the second base station using the second non-geostationary satellite station as a relay station) after the cell formation area is switched. At this time, the terminal device 50 falls back to the random access procedure and performs a connection procedure with the second non-geostationary satellite station (or the second base station using the second non-geostationary satellite station as a relay station). The base station may notify the terminal device 50 of information necessary for this procedure in advance.

The information necessary for the random access procedure after switching of the cell formation area may include the information indicated in (1) to (6) below.
(1) Resource for Physical Random Access Channel (PRACH) transmission after switching of the cell formation area
(2) Preamble sequence after switching of the cell formation area
(3) Cell ID after switching of the cell formation area
(4) Uplink/downlink carrier frequency after switching of the cell formation area
(5) Bandwidth after switching of the cell formation area
(6) Radio Resource Configuration after switching of the cell formation area

### (C2) Information related to necessity/unnecessity of the random access procedure

The base station may receive, as the information related to switching of the cell formation area, information related to whether the random access procedure is necessary after switching of the cell formation area (or at the time of the processing of switching the cell formation area). The information related to whether the random access procedure is necessary (also referred to as information related to skipping of the random access procedure) is information for determining whether the random access procedure is necessary for switching the cell formation area. In a case of determining that the random access procedure is unnecessary based on the above-described information, the terminal device 50 skips the random access procedure when switching the cell formation area. That is, the terminal device 50 switches the cell formation area without the random access procedure. On the other hand, in a case of determining that the random access procedure is necessary, the terminal device 50 executes the random access procedure when switching the cell formation area.

### Others

The terminal device 50 may be notified, from the base station being connected, of the information related to switching of the cell formation area before switching of the cell formation area, or the terminal device 50 may be notified of the information at the time of cell attach.

There may be one or more pieces of information related to switching of the cell formation area. For example, the base station is assumed to be a non-ground station 30, such as a satellite station, that moves on a predetermined orbit. Alternatively, the base station is assumed to be a device that uses, as a relay station, the non-ground station 30 moving on a predetermined orbit. At this time, the base station and/or the terminal device 50 can estimate the non-ground station 30 (for example, a satellite station) to which the terminal device 50 may connect in the future. Thus, the base station notifies the terminal device 50 of a plurality of pieces of information related to switching of the cell formation area in advance. The terminal device 50 performs processing at the time of switching the cell formation area by using the plurality of pieces of information notified.

Note that, in a case where the base station notifies the terminal device 50 of a plurality of pieces of information related to switching of the cell formation area, the base station may add, to the information related to switching of the cell formation area, information related to the order of application of the information related to switching of the cell formation area. The terminal device 50 may apply the information related to switching of the cell formation area according to the order indicated by the information related to the order.

### 4-3. Performance of Switching of Cell Formation Area

Now, switching of the cell formation area by the terminal device 50 will be described.

Upon receiving the information related to switching of the cell formation area, the terminal device 50 performs switching of the cell formation area based on the received information.

### Switching Example 1

As described above, the information related to switching of the cell formation area may include information related to the execution of switching of the cell formation area. The terminal device 50 may switch the cell formation area in a case of receiving the information related to switching of the cell formation area. At this time, the terminal device 50 may perform switching of the cell formation area at the timing of receiving the information related to the execution of switching of the cell formation area. Alternatively, the terminal device 50 may perform switching of the cell formation area at a timing when a predetermined time has elapsed since reception of the information related to the execution of switching of the cell formation area. The predetermined time may be a time uniquely determined by the specification or the like, or may be a time provided as notification by control information or the like.

### Switching Example 2

As described above, the information related to switching of the cell formation area may include information related to a trigger for performing switching of the cell formation area (hereinafter referred to as trigger information). The terminal device 50 may switch the cell formation area based on the trigger information. For example, the terminal device 50 may determine to perform switching of the cell formation area in a case where any of the following triggers (1) to (3) is satisfied. The following trigger examples are merely illustrative, while not limited thereto.
(1) When the timer related to switching of the cell formation area becomes zero
(2) When the start time to switch the cell formation area arrives
(3) In a case where the position of the satellite station and/or the position of the terminal device which are/is regarded as trigger occurrence is reached, the position(s) being provided as notification in advance.

Note that the position of the satellite station regarded as trigger occurrence in (3) may be a position determined from the position information, time information, orbit information, altitude information, time information necessary for circling the earth, or the like of the non-geostationary satellite.

The terminal device 50 may apply any of the following (4) to (10) as a trigger. The following trigger examples are merely illustrative, while not limited thereto.

(4) In a case where the communication quality (for example, RSRP) of the cell formation area to which the terminal device 50 belongs is equal to or higher than a threshold (Threshold)

(5) In a case where the communication quality (for example, RSRP) of the cell formation area to which the terminal device 50 belongs is equal to or lower than a threshold

(6) In a case where the communication quality (for example, RSRP) of the adjacent cell formation area is equal to or offset higher than the communication quality (for example, RSRP) of the cell formation area to which the adjacent cell formation area belongs.

(7) In a case where the cell has reception quality better than the communication quality (for example, RSRP) of the cell to which the communication quality (for example, RSRP) of the adjacent cell formation area belongs

(8) In a case where the communication quality (for example, RSRP) of the cell formation area to which the terminal device 50 belongs becomes worse than a first threshold value and the communication quality (for example, RSRP) of the adjacent cell formation area becomes better than a second threshold value

(9) In a case where the quality of the reference signal (for example, CSI-RS) resource becomes better than a threshold

(10) In a case that the quality of a reference signal (for example, CSI-RS) resource becomes offset higher than that of a reference signal to be compared.

### Application of Communication Parameters

As described above, the information related to switching of the cell formation area may include information related to the communication parameters after switching of the cell formation area (hereinafter referred to as communication parameter information). After switching the cell formation area, the terminal device 50 may switch the communication parameters (transmission parameters and/or reception parameters) based on the communication parameter information. The terminal device 50 may apply the communication parameter information at the timing of receiving the information related to the execution of switching of the cell formation area, or may apply the communication parameter information at a timing after a predetermined time.

The predetermined timing may be a timing immediately after switching of the cell formation area or a timing when a predetermined time has elapsed since switching of the cell formation area. Here, the predetermined time may be a time determined based on the timer information or the like provided as notification in advance, or may be a time determined based on information such as the time offset.

### 4-4. Skipping of Processing such as Random Access Procedure

Now, skipping of processing such as the random access procedure will be described.

After switching the cell formation area (or at the time of the processing of switching the cell formation area), the terminal device 50 need not perform processing performed at the time of normal cell switching (for example, the random access procedure and/or power control).

As described above, the information related to switching of the cell formation area may include information related to the necessity/unnecessity of the random access procedure (information related to skipping of the random access procedure). In a case where the terminal device 50 determines that the random access procedure is unnecessary based on the above-described information, the terminal device 50 may omit the random access procedure and immediately start data transmission. For example, the terminal device 50 can perform communication without executing the random access procedure by acquiring, from a base station in advance, information related to switching of the cell formation area. In a situation where the distance to the base station can be estimated in advance as is the case with satellite communication, the terminal device 50 can establish uplink data communication synchronization without the random access procedure. The terminal device 50 may estimate a distance between the non-geostationary satellite station and the terminal from position information, movement information, and orbit information of the non-geostationary satellite station, position information of the terminal device 50 by a global navigation satellite system (GNSS), time information, and the like, and transmit data in a state where uplink synchronization is established.

After switching the cell formation area, the terminal device 50 performs uplink transmission without performing the random access procedure. At this time, the terminal device 50 may continue to use a timing advance value used before switching of the cell formation area. Alternatively, the terminal device 50 may perform communication using the timing advance value based on information related to the timing advance included in information related to switching of the cell formation area.

After switching the cell formation area, the terminal device 50 may continue to use the value of the power control used before the cell formation area is switched. Alternatively, the terminal device 50 may perform communication using the power control value based on the information related to the power control included in the information related to switching of the cell formation area.

### 4-5. Continuous Transmission of Same Data

Now, the continuous transmission of the same data will be described.

The terminal device 50 may continue to transmit the same data as data currently being transmitted after switching the cell formation area.

For example, in a case where the terminal device 50 is transmitting data by repeated transmission or the like before switching the cell formation area, the terminal device 50 may continuously transmit the same data as the data having been transmitted after switching the cell formation area. In the case of satellite communication, repeated transmission is effective for compensating for transmission quality deterioration due to long-distance transmission. In a case where the repeated transmission is disabled before or after switching of the cell formation area, a problem with the failure is deteriorated transmission quality. Accordingly, by enabling the repeated transmission before and after switching of the cell formation area, improvement of communication quality can be expected.

In a case of continuing to transmit the same data after switching the cell formation area, the base station may perform notification related to the continuous transmission of the same data to the terminal device 50. The base station that performs this notification may be the base station before switching of the cell formation area (for example, the non-ground station 30 that functions as the first non-geostationary satellite station or the ground station 20 that uses the first non-geostationary satellite station as a relay station). For example, the base station may include, in the information related to switching of the cell formation area, information indicating whether the data being transmitted can be continuously transmitted even after switching of the cell formation area, as notification related to the continuous transmission of the same data.

For example, in a case of receiving this notification, the terminal device 50 does not clear the transmission data from a transmission buffer at a timing after switching the cell formation area, and continues the repeated transmission of the data in the transmission buffer after switching the cell formation area. In a case where there is this notification, the terminal device 50 may clear the data held in the transmission buffer. In this case, the terminal device 50 needs to generate transmission data again after the cell formation area is switched, and unnecessary processing increases. In a case where there is not this notification (in a case where the continuous transmission is possible), the terminal device 50 does not need to clear the transmission data from the transmission buffer, and thus this enables the signal processing load of the terminal device 50 to be reduced.

The base station can perform a notification related to the continuous transmission of the same data by the following means.

### Notification Means 1

The base station may quasi-statically perform the notification related to the continuous transmission of the same data by RRC signaling, system information, or the like.

For example, in a case where the transmission of the data being transmitted is not completed and switching of the cell formation area is to occur, the base station performs the notification related to the continuation of the data transmission after switching of the cell formation area.

For example, the base station may perform notification of a HARQ process number as the notification related to the continuation of the data transmission. In a case where this notification is performed, the terminal device 50 continues the data transmission after switching the cell formation area in a case where the transmission of the data being transmitted is not completed only with the HARQ process number provided as notification and switching of the cell formation area is to occur. The base station may notify only the HARQ process number before switching of the cell formation area, may notify the HARQ process number after switching of the cell formation area, or may notify both the HARQ process numbers.

### Notification Means 2

The base station may perform notification related to the continuous transmission of the same data by a MAC Control Element (MAC CE) or Downlink Control Information (DCI). Specific examples of the notification means 2 include the following examples (1) and (2).

### (1) Addition of a new notification field

The base station may perform notification related to the continuation of the data transmission by using one bit. For example, in a case where the transmission of the data being transmitted is not completed and switching of the cell formation area is to occur, the base station performs, by using one bit, the notification related to the continuation of the data transmission after switching of the cell formation area. For example, "1" indicates continuation of data transmission, and "0" indicates non-continuation of data transmission. At this time, the terminal device 50 needs information indicating data to be continuously transmitted, the data being the same as data that had been transmitted before switching of the cell formation area. For example, the terminal device 50 refers to a HARQ process number provided as notification in another field. Then, the terminal device 50 continuously transmits data of the same number as the HARQ process number provided as notification among the HARQ process numbers before switching of the cell formation area.

The base station may perform notification related to the continuation of data transmission by using a plurality of bits. For example, the base station may notify, by using a plurality of bits, the terminal device 50 of which HARQ process number of the data before switching of the cell formation area is to be continuously transmitted. For example, in a case of being notified of "0001", the terminal device 50 continuously transmits the data of the HARQ process number "0001" before switching of the cell formation area. At this time, the HARQ process number after switching of the cell formation area may be different from the HARQ process number before switching of the cell formation area. For example, for the HARQ process number "0001" before switching of the cell formation area, the terminal device 50 may continue the transmission with the HARQ process number "0010" after switching of the cell formation area. The base station may use one of the plurality of bits as a flag indicating whether the terminal device 50 performs continuous transmission of the transmission data before switching of the cell formation area.

### (2) Notification by NDI

The base station may perform notification related to continuation of data transmission by using a new data indicator (NDI). In a case where a notification indicating continuation of data transmission has been received, the notified HARQ process is the same as the HARQ process that has performed transmission before switching of the cell formation area, and the NDI indicates retransmission, then the terminal device 50 continues repeated transmission of the data transmitted before switching of the cell formation area.

### Notification Means 3

In a case where the notified HARQ process is the same as the HARQ process of the data transmitted before switching of the cell formation area, the terminal device 50 may continuously transmit the data after switching the cell formation area. In the DCI, which HARQ process data is transmitted is provided as notification in the HARQ process number field. For example, in a case where notification, such as RRC signaling, that indicates continuation of data transmission is performed, and the transmission of data transmitted with the same HARQ process number as the HARQ process number provided as notification (data transmitted before switching of the cell formation area) has not been completed, then the terminal device 50 continues repeated transmission of the data after switching the cell formation area.

### 4-6. Communication between Base Stations

Now, communication between the base stations will be described.

When the cell formation area is switched, cooperation between the base stations (between the non-geostationary satellite stations) is necessary. For example, a base station before switching of the cell formation area (hereinafter referred to as a first base station) may notify, in advance, a base station after switching of the cell formation area (hereinafter referred to as a second base station) of information indicated in the following specific examples. Alternatively, the second base station after switching of the cell formation area may notify the first base station before switching of the cell formation area of the information in advance in the following specific examples.

For example, the first base station transmits information necessary after the terminal device 50 is connected to the second base station (second non-geostationary satellite station), to the second base station in advance before the terminal device 50 switches the communication area. The second base station transmits information necessary for the terminal device 50 to communicate with the second base station (second non-geostationary satellite station), to the first base station in advance before the terminal device 50 switches the communication area. The first base station generates information related to switching of the communication area based on the information received from the second base station.

Hereinafter, a specific example of information transmitted and received between base stations will be described. Note that the statement of the first base station in the following description can be replaced with the first non-geostationary satellite station. The statement of the second base station in the following description can be replaced with the second non-geostationary satellite station.

### Reception Data Received before Switching of Cell Formation Area

The first base station may transmit, to the second base station, the reception data received from the terminal device 50 before the cell formation area is switched.

### Information Necessary for Performing Continuous Transmission of Same Data

The first base station/the second base station may transmit, to the other base station, information that is necessary in a case where the terminal device 50/the second base station continuously transmits the same data after the cell formation area is switched. This information may include information shown in the following (1) to (5).
(1) HARQ process number
(2) The number of times transmission and reception have been completed (for example, the number of times transmission and reception have been performed up to which number among M times of Repetition transmission)
(3) Terminal Identification ID such as C-RNTI
(4) A configuration value (for example, dataScramblingIdentityPUSCH, dataScramblingIdentityPDSCH, or the like) necessary for scrambling sequence generation
(5) Physical layer cell identity

### Information Related to Communication Parameters

The second base station may transmit, to the first base station, information related to the communication parameters after switching of the cell formation area. This information may include information indicated in the following (1) to (10).
(1) Information related to a terminal-specific timing advance and/or information related to a cell-common timing advance after switching of the cell formation area
(2) Information related to transmission timing (frame) synchronization after switching of the cell formation area
(3) Terminal unique ID (C-RNTI) after switching of cell formation area
(4) Information related to the band after switching of the cell formation area
(5) SSB index after switching of cell formation area
(6) Information related to transmission weights after switching of the cell formation area
(7) Information related to the number of times of repeated transmissions after switching of the cell formation area
(8) Information related to HARQ-disabling after switching of cell formation area
(9) Information related to transmission power after switching of the cell formation area
(10) Information related to the position, orbit, time, and altitude of the satellite device after switching of the cell formation area

### Information Related to Random Access Procedure

The second base station may transmit, to the first base station, information necessary for the terminal device 50 to perform the random access procedure after switching of the cell formation area. This information may include information indicated in the following (1) to (6).
(1) Resource for Physical Random Access Channel (PRACH) transmission after switching of the cell formation area
(2) Preamble sequence after switching of the cell formation area
(3) Cell ID after switching of the cell formation area
(4) Uplink/downlink carrier frequency after switching of the cell formation area
(5) Bandwidth after switching of the cell formation area
(6) Radio Resource Configuration after switching of the cell formation area

### 5. Sequence Examples

Based on the above, sequence examples (Sequence Example 1 and Sequence Example 2) at the time of switching of the cell formation area will be described. In Sequence Example 1, an example will be described in which the trigger for switching the cell formation area is detected on the initiative of the base station. In Sequence Example 2, an example will be described in which detection of the trigger for switching the cell formation area is triggered on the initiative of the terminal device 50.

In the following sequence example, a first base station indicates a base station before switching of a cell formation area, and a second base station indicates a base station after switching of a cell formation area.

The first base station and the second base station may each be a non-ground station 30 (e.g., a non-geostationary satellite station). In a case where the first base station is a non-geostationary satellite station, the statement of the first base station can be replaced with the first non-geostationary satellite station. In a case where the second base station is a non-geostationary satellite station, the statement of the second base station can be replaced with the second non-geostationary satellite station.

The first base station and the second base station are each not limited to the non-ground station 30. The first base station and the second base station may be the ground station 20 using the non-ground station 30 as a relay station. For example, the first base station may be the ground station 20 using the first non-geostationary satellite station as a relay station. The second base station may be the ground station 20 using the second non-geostationary satellite station as a relay station. Note that, in a case where the first base station and the second base station are base stations using the non-ground station 30 as a relay station, the first base station and the second base station may be one base station. In this case, communication between the first base station and the second base station described below can be regarded as data movement within the base station.

### 5-1. Sequence Example 1

Fig. 15 is a diagram illustrating an example of a sequence at the time of switching of the cell formation area. As described above, in Sequence Example 1, the trigger for switching the cell formation area is detected on the initiative of the base station. Hereinafter, the processing of switching the cell formation area according to Sequence 1 will be described with reference to Fig. 15.

First, the first base station transmits a downlink synchronization signal to the ground (step S101). The terminal device 50 establishes downlink synchronization with the first base station based on the downlink synchronization signal from the first base station. The first base station transmits the system information to the ground (step S102). The terminal device 50 acquires the system information from the first base station.

Then, the first base station and the terminal device 50 execute the random access procedure (step S103). During or after random access, the terminal device 50 notifies the first base station of information related to the capability of the terminal device 50 (step S104).

The first base stations (for example, the notification section 331 of the non-ground station 30) transmit, to the terminal device 50, information related to switching of the cell formation area (hereinafter also referred to as connection switching information) (step S105). For example, the first base station notifies the terminal device 50 of information necessary for communication (transmission and/or reception) at the time of switching of the cell formation area. At this time, the first base station may perform notification of both information necessary for communication in a cell formation area before switching (hereinafter, also referred to as a first cell formation area) and information necessary for communication in a cell formation area after switching (hereinafter, also referred to as a second cell formation area). Here, the first cell formation area is a cell formation area formed by a first geostationary satellite station. The second cell formation area is a cell formation area formed by a second geostationary satellite station.

Note that the first base station (for example, the reception section 332 of the non-ground station 30) may acquire information for generating connection switching information (for example, information necessary for the terminal device 50 to perform communication in the second cell formation area) from the second base station in advance before transmitting the connection switching information to the terminal device 50.

The acquisition section 531 of the terminal device 50 acquires the connection switching information from the first base station. Then, the configuration section 532 of the terminal device 50 performs configuration based on the information necessary for communication with the first base station (step S106). Hereinafter, the configuration here is also referred to as a first base station configuration. Then, the communication control section 534 of the terminal device 50 communicates with the first base station (step S107).

Subsequently, the terminal device 50 detects whether a trigger for switching the cell formation area has occurred (step S108). When the trigger for switching the cell formation area occurs, the terminal device 50 notifies the first base station of the occurrence of the switching trigger (step S109). Note that, in Sequence Example 1, the terminal device 50 takes the initiative in detecting the trigger, but the base station may take the initiative in detecting the switching trigger. This will be described in Sequence Example 2 described below.

The first base station requests the second base station, which is a switching destination of the cell formation area, to switch the cell formation area (step S110). In response to this request, the second base station transmits an ACK/NACK (step S111). Hereinafter, the description will be continued assuming that the second base station has transmitted the ACK.

The first base station (for example, the transmission section 333 of the non-ground station 30) notifies the second base station of context information held therein (step S112). In response to this notification, the second base station transmits the ACK/NACK (step S113). Hereinafter, the description will be continued assuming that the second base station has transmitted the ACK.

The first base station notifies the terminal device 50 of switching of the cell formation area (step S114). Upon receiving the notification from the first base station, the switching processing section 533 of the terminal device 50 switches the first base station configuration to the second base station configuration (step S115). The second base station configuration is a configuration based on information necessary for communication in the second cell formation area. Accordingly, the terminal device 50 can switch the connection from the first base station to the second base station without handover (that is, without the random access procedure).

At this time, the terminal device 50 may update the connection switching information (for example, information necessary for communication at the time of switching of the cell formation area) to new information (step S116). For example, the second base station (for example, the notification section 331 of the non-ground station 30) may transmit connection switching information (for example, information necessary for communication at the time of switching of the cell formation area) to the terminal device 50. Then, the terminal device 50 may update the connection switching information to the connection switching information received from the second base station.

The communication control section 534 of the terminal device 50 continues communication with the second base station using the second base station configuration (step S117).

### 5-2. Sequence Example 2

Fig. 16 is a diagram illustrating another example of the sequence at the time of switching of the cell formation area. As described above, in Sequence Example 2, the terminal device 50 takes the initiative in detecting the trigger for switching the cell formation area. Hereinafter, the processing of switching the cell formation area according to Sequence 2 will be described with reference to Fig. 16.

First, the first base station transmits a downlink synchronization signal to the ground (step S201). The terminal device 50 establishes downlink synchronization with the first base station based on the downlink synchronization signal from the first base station. The first base station transmits the system information to the ground (step S202). The terminal device 50 acquires the system information from the first base station.

Then, the first base station and the terminal device 50 execute the random access procedure (step S203). During or after the random access, the terminal device 50 notifies the first base station of information related to the capability of the terminal device 50 (step S204).

The first base station (for example, the notification section 331 of the non-ground station 30) transmits, to the terminal device 50, the information related to switching of the cell formation area (hereinafter also referred to as the connection switching information) (step S205). For example, the first base station notifies the terminal device 50 of the information necessary for communication (transmission and/or reception) at the time of switching of the cell formation area. At this time, the first base station may perform notification of both the information necessary for communication in the cell formation area before switching (hereinafter, also referred to as the first cell formation area) and the information necessary for communication in the cell formation area after switching (hereinafter, also referred to as the second cell formation area). Here, the first cell formation area is a cell formation area formed by the first geostationary satellite station. The second cell formation area is a cell formation area formed by the second geostationary satellite station.

Note that the first base station (for example, the reception section 332 of the non-ground station 30) may acquire information for generating connection switching information (for example, information necessary for the terminal device 50 to perform communication in the second cell formation area) from the second base station in advance before transmitting the connection switching information to the terminal device 50.

The acquisition section 531 of the terminal device 50 acquires the connection switching information from the first base station. Then, the configuration section 532 of the terminal device 50 performs configuration based on the information necessary for communication with the first base station (step S206). Hereinafter, the configuration here is also referred to as the first base station configuration. Then, the communication control section 534 of the terminal device 50 communicates with the first base station (step S207).

Then, the first base station detects whether the trigger for switching the cell formation area has occurred (step S208). When the trigger for switching the cell formation area occurs, the first base station requests the second base station, which is the switching destination of the cell formation area, to switch the cell formation area (step S209). In response to this request, the second base station transmits the ACK/NACK (step S210). Hereinafter, the description will be continued assuming that the second base station has transmitted the ACK.

The first base station (for example, the transmission section 333 of the non-ground station 30) notifies the second base station of the Context information held therein (step S211). In response to this notification, the second base station transmits the ACK/NACK (step S212). Hereinafter, the description will be continued assuming that the second base station has transmitted the ACK.

The first base station notifies the terminal device 50 of switching of the cell formation area (step S213). Upon receiving the notification from the first base station, the switching processing section 533 of the terminal device 50 switches the first base station configuration to the second base station configuration (step S214). The second base station configuration is a configuration based on the information necessary for communication in the second cell formation area.

At this time, the terminal device 50 may update the connection switching information (for example, information necessary for communication at the time of switching of the cell formation area) to new information (step S215). For example, the second base station may transmit connection switching information (for example, information necessary for communication at the time of switching the cell formation area) to the terminal device 50. Then, the terminal device 50 may update the connection switching information to the connection switching information received from the second base station.

The communication control section 534 of the terminal device 50 continues communication with the second base station using the second base station configuration (step S216).

### 6. Variations

The above-described embodiment is merely an example, and various modifications and applications are possible.

For example, in the above-described embodiments, the base station that communicates with the terminal device 50 is a non-geostationary satellite station or the ground station 20 using a non-geostationary satellite station as a relay station, but the base station is not limited thereto. For example, the base station may be an aircraft station or a ground station using the aircraft station as a relay station. In this case, the description of the non-geostationary satellite station (for example, the first non-geostationary satellite station and/or the second non-geostationary satellite station) described above can be replaced with the aircraft station (for example, the first aircraft station and/or the second aircraft station) as appropriate. The base station may be a non-ground station 30 (for example, a geostationary satellite station, a non-geostationary satellite station, or an aircraft station) using a non-geostationary satellite station or an aircraft station as a relay station.

The control device that controls the management device 10, the ground station 20, the non-ground station 30, the relay station 40, and the terminal device 50 according to the present embodiment may be implemented by a dedicated computer system or a general-purpose computer system.

For example, the communication program for executing the above-described operation is stored in a computer-readable recording medium such as an optical disk, a semiconductor memory, a magnetic tape, or a flexible disk for distribution. Then, for example, the program is installed in a computer, and the above-described processing is executed, thus configuring the control device. At this time, the control device may be an external device of the management device 10, the ground station 20, the non-ground station 30, the relay station 40, or the terminal device 50 (for example, a personal computer). The control device may be an internal device of the management device 10, the ground station 20, the non-ground station 30, the relay station 40, or the terminal device 50 (for example, the control section 13, the control section 23, the control section 33, the control section 43, or the control section 53).

The communication program may be stored in a disk device included in a server device on a network such as the Internet to enable downloading to a computer and the like. The above-described functions may be realized by cooperation between an Operating System (OS) and application software. In this case, the portion other than the OS may be stored in a medium for distribution, or the portion other than the OS may be stored in a server device to enable downloading to a computer and the like.

Among the processing operations described in the above-described embodiments, all or some of the processing operations described as being automatically performed may be manually performed, or all or some of the processing operations described as being manually performed may be automatically performed by a known method. In addition, the processing procedures, specific names, and information including various data and parameters described in the above document and drawings can be arbitrarily changed unless otherwise specified. For example, the various types of information illustrated in the drawings are not limited to the illustrated information.

The components of the devices illustrated in the drawings are functionally conceptual and are not necessarily physically configured as illustrated in the drawings. That is, specific forms of distribution and integration of the devices are not limited to those illustrated in the drawings, and all or some of the devices may be configured to be functionally or physically distributed or integrated in any unit according to various loads, usage conditions, and the like.

The above-described embodiments can be combined as appropriate in a region where the contents of processing do not contradict each other. The order of the steps illustrated in the flowcharts or sequence diagrams of the above-described embodiments may be changed as appropriate.

For example, the present embodiments can each be implemented as any configuration constituting a device or a system, for example, a processor as System Large Scale Integration (LSI) or the like, a module each using a plurality of processors or the like, a unit using a plurality of modules or the like, a set including the unit to which other functions are added, or the like (that is, a configuration of a part of the device).

Note that, in the present embodiments, the system means a set of a plurality of components (devices, modules (parts), and the like), and whether all the components are in the same housing does not matter. Therefore, the system refers to both a plurality of devices housed in separate housings and connected via a network, and one device in which a plurality of modules are housed in one housing.

For example, the present embodiments can take a configuration of cloud computing in which a plurality of devices perform processing of one function in a shared and cooperated manner via a network.

### 7. Conclusion

As described above, the communication system 1 of the present embodiments includes the base station and the terminal device 50. The base station is a non-ground station that is connected to the terminal device as a first non-geostationary satellite station among a plurality of non-geostationary satellite stations forming an earth fixed cell. Alternatively, the base station is a ground station that connects to the terminal device using the first non-geostationary satellite station as a relay station.

The base station notifies the terminal device 50 of information related to switching of connection from the first non-geostationary satellite station to a second non-geostationary satellite station in advance before the terminal device 50 switches the connection from the first non-geostationary satellite station to the second non-geostationary satellite station. The terminal device switches the connection from the first non-geostationary satellite station to the second non-geostationary satellite station without handover (that is, without a random access procedure) based on the information related to switching of the connection.

In this way, the terminal device 50 acquires the information related to switching of the connection from the non-geostationary satellite station in advance before switching the connection. Thus, even in a case where the terminal device performs communication using a non-terrestrial network using the earth fixed cell, the terminal device can smoothly switch the connection using the information related to switching of the connection. As a result, the terminal device 50 can realize communication with high communication performance.

The effects of the embodiments described in the present specification are merely examples and are not limited, and other effects may be produced.

Note that the present technology can also take the following configurations.
(1) A communication device connected to a first non-geostationary satellite station among a plurality of non-geostationary satellite stations forming a cell positionally fixed on ground, the communication device including:
   an acquisition section configured to acquire, from the first non-geostationary satellite station in advance before switching processing, information related to switching of connection from the first non-geostationary satellite station to a second non-geostationary satellite station among the plurality of non-geostationary satellite stations; and
   a switching processing section configured to switch the connection from the first non-geostationary satellite station to the second non-geostationary satellite station without a random access procedure, based on the information related to switching of the connection.
(2) The communication device according to (1),
   wherein the information related to switching of the connection includes information for determining whether the random access procedure is necessary for switching the connection, and
   the switching processing section switches the connection from the first non-geostationary satellite station to the second non-geostationary satellite station without the random access procedure in a case where the random access procedure is determined to be unnecessary.
(3) The communication device according to (1) or (2),
   wherein the information related to switching of the connection can include information related to execution of switching of connection,
   in a case where the information related to switching of the connection includes the information related to the execution of switching of the connection, the switching processing section starts the switching processing of switching the connection from the first non-geostationary satellite station to the second non-geostationary satellite station, at a predetermined timing after receiving the information related to switching of the connection.
(4) The communication device according to (1) or (2),
   wherein the information related to switching of the connection includes trigger information for execution of switching of connection, and
   the switching processing section starts the switching processing of switching the connection from the first non-geostationary satellite station to the second non-geostationary satellite station at a timing determined based on the trigger information.
(5) The communication device according to (4),
   wherein the trigger information includes timer information related to switching of the connection, and
   the switching processing section starts the switching processing at a timing determined by the timer information.
(6) The communication device according to (4),
   wherein the trigger information includes information related to a start time to switch the connection, and
   the switching processing section starts the switching processing in a case where the start time to switch the connection arrives.
(7) The communication device according to (4),
   wherein the trigger information includes position information of at least one of the first non-geostationary satellite station, the second non-geostationary satellite station, or the communication device, and
   the switching processing section starts the switching processing in a case where a position of at least one of the first non-geostationary satellite station, the second non-geostationary satellite station, or the communication device coincides with a position indicated by the position information.
(8) The communication device according to (1) or (2), wherein the information related to switching of the connection includes information related to a communication operation of the communication device during switching of the connection.
(9) The communication device according to (1) or (2), wherein the information related to switching of the connection includes information related to a communication parameter after switching of the connection.
(10) The communication device according to (9), wherein the information related to the communication parameter includes at least one of information related to a timing advance, information related to transmission timing synchronization, information related to a transmission weight, information related to HARQ-disabling, or information related to transmission power.
(11) The communication device according to (1) or (2), wherein the information related to switching of the connection includes information necessary for the random access procedure after switching of the connection.
(12) The communication device according to (1) or (2), wherein the information related to switching of the connection includes information indicating whether data being transmitted can be continuously transmitted even after switching of the connection.
(13) A communication device connected to a terminal device as a first non-geostationary satellite station among a plurality of non-geostationary satellite stations forming a cell positionally fixed on ground or connected to the terminal device via the first non-geostationary satellite station, the communication device including:
   a notification section configured to notify the terminal device of information related to switching of connection from the first non-geostationary satellite station to a second non-geostationary satellite station among the plurality of non-geostationary satellite stations in advance before the terminal device switches the connection from the first non-geostationary satellite station to the second non-geostationary satellite station without a random access procedure.
(14) The communication device according to (13), further including:
   a transmission section configured to transmit information necessary after the terminal device is connected to the second non-geostationary satellite station, to the second non-geostationary satellite station in advance before the terminal device executes switching processing.
(15) The communication device according to (13) or (14), further including:
   a reception section configured to receive information necessary for the terminal device to communicate with the second non-geostationary satellite station, from the second non-geostationary satellite station in advance before the terminal device executes switching processing,
   wherein the notification section generates the information related to switching of the connection based on the information received from the second non-geostationary satellite station.
(16) The communication device according to (15), wherein the reception section receives, from the second non-geostationary satellite station,
   information related to a communication parameter necessary for communication between the terminal device and the second non-geostationary satellite station, and
   the notification section generates the information related to switching of the connection based on the information related to the communication parameter.
(17) The communication device according to (15) or (16),
   wherein the reception section receives, from the second non-geostationary satellite station, information necessary for the random access procedure of the terminal device with the second non-geostationary satellite station, and
   the notification section generates the information related to switching of the connection based on the information necessary for the random access procedure.
(18) A communication method executed by a communication device connected to a first non-geostationary satellite station among a plurality of non-geostationary satellite stations forming a cell positionally fixed on ground, the communication method including:
   acquiring, from the first non-geostationary satellite station in advance before switching processing, information related to switching of connection from the first non-geostationary satellite station to a second non-geostationary satellite station among the plurality of non-geostationary satellite stations; and
   switching the connection from the first non-geostationary satellite station to the second non-geostationary satellite station without a random access procedure, based on the information related to switching of the connection.
(19) A communication method executed by a communication device connected to a terminal device as a first non-geostationary satellite station among a plurality of non-geostationary satellite stations forming a cell positionally fixed on ground or connected to the terminal device via the first non-geostationary satellite station, the communication method including:
   notifying the terminal device of information related to switching of connection from the first non-geostationary satellite station to a second non-geostationary satellite station among the plurality of non-geostationary satellite stations in advance before the terminal device switches the connection from the first non-geostationary satellite station to the second non-geostationary satellite station without a random access procedure.
(20) A communication system including a terminal device connected to a first non-geostationary satellite station among a plurality of non-geostationary satellite stations forming a cell positionally fixed on ground; and a base station connected to the terminal device as the first non-geostationary satellite station or via the first non-geostationary satellite station,
   wherein the base station includes
   a notification section configured to notify the terminal device of information related to switching of connection from the first non-geostationary satellite station to a second non-geostationary satellite station among the plurality of non-geostationary satellite stations in advance before the terminal device switches the connection from the first non-geostationary satellite station to the second non-geostationary satellite station without a random access procedure, and
   the terminal device includes
      an acquisition section configured to acquire the information related to switching of the connection from the first non-geostationary satellite station to the second non-geostationary satellite station among the plurality of non-geostationary satellite stations from the first non-geostationary satellite station in advance before switching processing; and
   a switching processing section configured to switch the connection from the first non-geostationary satellite station to the second non-geostationary satellite station without the random access procedure based on the information related to switching of connection.

### Reference Signs List

- 1: Communication system
- 10: Management device
- 20: Ground station
- 30: Non-ground station
- 40: Relay station
- 50: Terminal device
- 11: Communication section
- 21, 31, 41, 51: Radio communication section
- 12, 22, 32, 42, 52: Storage section
- 13, 23, 33, 43, 53: Control section
- 24, 44: Network communication section
- 211, 311, 411, 511: Reception processing section
- 212, 312, 412, 512: Transmission processing section
- 213, 313, 413, 513: Antenna
- 331: Notification section
- 332: Reception section
- 333: Transmission section
- 334, 534: Communication control section
- 531: Acquisition section
- 532: Configuration section
- 533: Switching processing section

## Claims

1. A communication device connected to a first non-geostationary satellite station among a plurality of non-geostationary satellite stations forming a cell positionally fixed on ground, the communication device comprising:
an acquisition section configured to acquire, from the first non-geostationary satellite station in advance before switching processing, information related to switching of connection from the first non-geostationary satellite station to a second non-geostationary satellite station among the plurality of non-geostationary satellite stations; and
a switching processing section configured to switch the connection from the first non-geostationary satellite station to the second non-geostationary satellite station without a random access procedure, based on the information related to switching of the connection.

2. The communication device according to claim 1, wherein
the information related to switching of the connection includes information for determining whether the random access procedure is necessary for switching the connection, and
the switching processing section switches the connection from the first non-geostationary satellite station to the second non-geostationary satellite station without the random access procedure in a case where the random access procedure is determined to be unnecessary.

3. The communication device according to claim 1, wherein
the information related to switching of the connection can include information related to execution of switching of connection,
in a case where the information related to switching of the connection includes the information related to the execution of switching of the connection, the switching processing section starts the switching processing of switching the connection from the first non-geostationary satellite station to the second non-geostationary satellite station, at a predetermined timing after receiving the information related to switching of the connection.

4. The communication device according to claim 1, wherein
the information related to switching of the connection includes trigger information for execution of switching of connection, and
the switching processing section starts the switching processing of switching the connection from the first non-geostationary satellite station to the second non-geostationary satellite station at a timing determined based on the trigger information.

5. The communication device according to claim 4, wherein
the trigger information includes timer information related to switching of the connection, and
the switching processing section starts the switching processing at a timing determined by the timer information.

6. The communication device according to claim 4, wherein
the trigger information includes information related to a start time to switch the connection, and
the switching processing section starts the switching processing in a case where the start time to switch the connection arrives.

7. The communication device according to claim 4, wherein
the trigger information includes position information of at least one of the first non-geostationary satellite station, the second non-geostationary satellite station, or the communication device, and
the switching processing section starts the switching processing in a case where a position of at least one of the first non-geostationary satellite station, the second non-geostationary satellite station, or the communication device coincides with a position indicated by the position information.

8. The communication device according to claim 1, wherein
the information related to switching of the connection includes information related to a communication operation of the communication device during switching of the connection.

9. The communication device according to claim 1, wherein
the information related to switching of the connection includes information related to a communication parameter after switching of the connection.

10. The communication device according to claim 9, wherein
the information related to the communication parameter includes at least one of information related to a timing advance, information related to transmission timing synchronization, information related to a transmission weight, information related to HARQ-disabling, or information related to transmission power.

11. The communication device according to claim 1, wherein
the information related to switching of the connection includes information necessary for the random access procedure after switching of the connection.

12. The communication device according to claim 1, wherein
the information related to switching of the connection includes information indicating whether data being transmitted can be continuously transmitted even after switching of the connection.

13. A communication device connected to a terminal device as a first non-geostationary satellite station among a plurality of non-geostationary satellite stations forming a cell positionally fixed on ground or connected to the terminal device via the first non-geostationary satellite station, the communication device comprising:
a notification section configured to notify the terminal device of information related to switching of connection from the first non-geostationary satellite station to a second non-geostationary satellite station among the plurality of non-geostationary satellite stations in advance before the terminal device switches the connection from the first non-geostationary satellite station to the second non-geostationary satellite station without a random access procedure.

14. The communication device according to claim 13, further comprising:
a transmission section configured to transmit information necessary after the terminal device is connected to the second non-geostationary satellite station, to the second non-geostationary satellite station in advance before the terminal device executes switching processing.

15. The communication device according to claim 13, further comprising:
a reception section configured to receive information necessary for the terminal device to communicate with the second non-geostationary satellite station, from the second non-geostationary satellite station in advance before the terminal device executes switching processing, wherein
the notification section generates the information related to switching of the connection based on the information received from the second non-geostationary satellite station.

16. The communication device according to claim 15, wherein
the reception section receives, from the second non-geostationary satellite station, information related to a communication parameter necessary for communication between the terminal device and the second non-geostationary satellite station, and
the notification section generates the information related to switching of the connection based on the information related to the communication parameter.

17. The communication device according to claim 15, wherein
the reception section receives, from the second non-geostationary satellite station, information necessary for the random access procedure of the terminal device with the second non-geostationary satellite station, and
the notification section generates the information related to switching of the connection based on the information necessary for the random access procedure.

18. A communication method executed by a communication device connected to a first non-geostationary satellite station among a plurality of non-geostationary satellite stations forming a cell positionally fixed on ground, the communication method comprising:
acquiring, from the first non-geostationary satellite station in advance before switching processing, information related to switching of connection from the first non-geostationary satellite station to a second non-geostationary satellite station among the plurality of non-geostationary satellite stations; and
switching the connection from the first non-geostationary satellite station to the second non-geostationary satellite station without a random access procedure, based on the information related to switching of the connection.

19. A communication method executed by a communication device connected to a terminal device as a first non-geostationary satellite station among a plurality of non-geostationary satellite stations forming a cell positionally fixed on ground or connected to the terminal device via the first non-geostationary satellite station, the communication method comprising:
notifying the terminal device of information related to switching of connection from the first non-geostationary satellite station to a second non-geostationary satellite station among the plurality of non-geostationary satellite stations in advance before the terminal device switches the connection from the first non-geostationary satellite station to the second non-geostationary satellite station without a random access procedure.

20. A communication system comprising a terminal device connected to a first non-geostationary satellite station among a plurality of non-geostationary satellite stations forming a cell positionally fixed on ground; and a base station connected to the terminal device as the first non-geostationary satellite station or via the first non-geostationary satellite station, wherein
the base station comprises
a notification section configured to notify the terminal device of information related to switching of connection from the first non-geostationary satellite station to a second non-geostationary satellite station among the plurality of non-geostationary satellite stations in advance before the terminal device switches the connection from the first non-geostationary satellite station to the second non-geostationary satellite station without a random access procedure, and
the terminal device comprises
an acquisition section configured to acquire the information related to switching of the connection from the first non-geostationary satellite station to the second non-geostationary satellite station among the plurality of non-geostationary satellite stations from the first non-geostationary satellite station in advance before switching processing; and
a switching processing section configured to switch the connection from the first non-geostationary satellite station to the second non-geostationary satellite station without the random access procedure based on the information related to switching of connection.
